# EUROPEAN PATENT SPECIFICATION

(11) **EP 3 206 355 B1**
(45) Date of publication and mention of the grant of the patent: **27.05.2020**
(21) Application number: 15849405.4
(22) Date of filing: 25.09.2015
(51) Int. Cl.: H04L 27/38, H04B 7/005

(54) **RECEIVING DEVICE, RECEIVING METHOD, AND PROGRAM FOR RECEPTION OF NON-LINEARLY DISTORTED SIGNALS**
EMPFANGSVORRICHTUNG, EMPFANGSVERFAHREN UND PROGRAMM FÜR DEN EMPFANG VON NICHT-LINEAR VERZERRTEN SIGNALEN
DISPOSITIF DE RÉCEPTION, PROCÉDÉ DE RÉCEPTION ET PROGRAMME POUR LA RÉCEPTION DE SIGNAUX AVEC DES DISTORTIONS NON-LINÉAIRES

(30) Priority: 06.10.2014 JP 2014205441
(43) Date of publication of application: 16.08.2017
(73) Proprietor: Sony Corporation, Tokyo 108-0075 (JP)
(72) Inventor: HIRAYAMA Yuichi, Tokyo 108-0075 (JP); KAMATA Hiroyuki, Tokyo 108-0075 (JP); KISHIMOTO Naomichi, Tokyo 108-0075 (JP)
(74) Representative: MFG Patentanwälte Meyer-Wildhagen Meggle-Freund Gerhard PartG mbB
(86) International application number: PCT/JP2015/077009
(87) International publication number: WO 2016/056395

(56) References cited:
- WO-A2-2004/100475
- JP-A- H03 174 851
- JP-A- H08 163 198
- JP-A- 2001 069 117
- JP-A- 2005 176 311
- JP-A- 2012 065 008
- US-A1- 2005 078 778
- 'Kodo Kotaiiki Eisei Digital Hoso no Denso Hoshiki' HYOJUN KIKAKU ARIB STANDARD ARIB STD- B44 29 July 2009, pages 5, 56 - 61, XP009501888

## Description

### TECHNICAL FIELD

The present disclosure relates to a reception device, a reception method, and a program, and more particularly, to a reception device, a reception method, and a program that are capable of compensating for distortion in a reception signal that does not include any known signal of the same constellation as that of the data section.

### BACKGROUND ART

Phase shift keying (PSK) schemes that use only phase information, such as quadrature phase shift keying (QPSK) and 8PSK, have been mainly used as the multilevel modulation schemes for satellite digital television broadcasting. However, in expectation of 4k/8k broadcasting, APSK schemes that use amplitude information as well as phase information, such as 16 amplitude phase shift keying (APSK) and 32APSK, are now ready to be used.

However, a reception signal of APSK is subject to nonlinear influence of a satellite repeater. Therefore, the signal points on an outer circumference include more amplitude/phase distortion than the signal points on an inner circumference. This causes cycle slips in carrier reproduction, or degradation of reception characteristics.

One of the techniques for compensating for such nonlinear transmission path distortion on the receiver side is disclosed in Comment A in ARIB STD-B44 (Non-Patent Document 1). ARIB STD-B44 is transmission standards for sophisticated broadband satellite digital broadcasting (sophisticated BS), and is a successor of the transmission standards for BS digital broadcasting (ARIB STD-B20) that are now in service in Japan.

In the ARIB STD-B44 transmission format, to compensate for nonlinear distortion in an APSK signal, signals of all the signal points of the same constellation as that of the data section are transmitted as known signals called transmission constellation signals. Therefore, the technique disclosed in Comment A of Non-Patent Document 1 is to compensate for nonlinear distortion by averaging the transmission constellation signal of each signal point subjected to nonlinear distortion, and performing a demodulation process and a forward error correction (FEC) process on the average point as the signal of the signal point. By this technique, reception performance is improved.

US 2005/0078778 A1 describes a method and system that provide the ability to measure a transmission performance characteristic. WO 2004/100475 describes a reception unit based on computation of log-likelihood ratios derived from the received signal.

### CITATION LIST

### NON-PATENT DOCUMENT

Non-Patent Document 1:
http://www.arib.or.jp/english/html/overview/doc/2-STD-B44v1_0.pdf

### SUMMARY OF THE INVENTION

### PROBLEMS TO BE SOLVED BY THE INVENTION

In broadcasting standards such as Digital Video Broadcasting (DVB)-S2 and DVB-S2X, however, signals of the same constellation as that of the data section are not transmitted as known signals, and therefore, the above described technique cannot be used.

The present disclosure is made in view of those circumstances, and aims to compensate for distortion in a reception signal that does not include any known signal of the same constellation as that of the data section.

### SOLUTIONS TO PROBLEMS

According to a first aspect, the invention provides a reception device in accordance with independent claim 1. According to a second aspect, the invention provides a reception method in accordance with independent claim 7. According to a third aspect, the invention provides a program in accordance with independent claim 8. Further aspects of the invention are set forth in the dependent claims, the drawings and the following description.

### EFFECTS OF THE INVENTION

According to one aspect of the present disclosure, signals can be received. Also, according to the one aspect of the present disclosure, it is possible to compensate for distortion in a reception signal that does not include any known signal of the same constellation as that of the data section.

It should be noted that effects of the present technology are not limited to the effects described above, and may include any of the effects described in the present disclosure.

### BRIEF DESCRIPTION OF DRAWINGS

Fig. 1 is a diagram showing an example of nonlinear influence of a satellite repeater.
Fig. 2 is a block diagram showing an example configuration of a satellite repeating device 12 shown in Fig. 1.
Fig. 3 is a graph showing an example of the output characteristics of a TWTA 42 shown in Fig. 2.
Fig. 4 is a diagram showing examples of the coordinate positions of respective signal points of transmission signals on the I-Q plane.
Fig. 5 is a graph showing the coordinate positions of the respective signal points of a signal amplified by the TWTA 42 on the I-Q plane.
Fig. 6 is a graph showing the coordinate positions of the respective signal points of a signal amplified by the TWTA 42 on the I-Q plane.
Fig. 7 is a diagram showing the transmission signal of one frame in the ARIB STD-B44 transmission format.
Fig. 8 is a diagram showing examples of the symbols of a transmission constellation signal.
Fig. 9 is a diagram for explaining the nonlinear distortion compensation to be performed by a reception device using the transmission constellation signal shown in Fig. 8.
Fig. 10 is a block diagram showing an example configuration of a first embodiment of a transmission/reception system to which the present disclosure is applied.
Fig. 11 is a diagram showing an example of the transmission signal of one frame in the DVB-S2 or DVB-S2X transmission format.
Fig. 12 is a diagram showing the coordinate positions of respective signal points of π/2BPSK on the I-Q plane.
Fig. 13 is a diagram showing examples of the coordinate positions of respective signal points of the modulation scheme of a transmission signal in the DVB-S2X transmission format on the I-Q plane.
Fig. 14 is a diagram showing examples of the coordinate positions of respective signal points of the modulation scheme of a transmission signal in the DVB-S2X transmission format on the I-Q plane.
Fig. 15 is a block diagram showing an example configuration of a reception device 112 shown in Fig. 10.
Fig. 16 is a block diagram showing an example configuration of the orthogonal detection unit 312 shown in Fig. 15.
Fig. 17 is a block diagram showing an example configuration of the equalization unit 313 shown in Fig. 15.
Fig. 18 is a block diagram showing an example configuration of the LDPC encoding/decoding unit 315 shown in Fig. 15.
Fig. 19 is a block diagram showing an example configuration of the distortion information generation unit 316 shown in Fig. 15.
Fig. 20 is a flowchart for explaining a reception process to be performed by the reception device 112 shown in Fig. 15.
Fig. 21 is a flowchart for explaining in detail the distortion information generation process in step S106 shown in Fig. 20.
Fig. 22 is a block diagram showing an example configuration of a reception device in a second embodiment of a transmission/reception system to which the present disclosure is applied.
Fig. 23 is a block diagram showing an example configuration of the distortion information generation unit 422 shown in Fig. 22.
Fig. 24 is a flowchart for explaining in detail a distortion information generation process to be performed by the distortion information generation unit 422 shown in Fig. 23.
Fig. 25 is a block diagram showing an example configuration of the hardware of a computer.

### MODES FOR CARRYING OUT THE INVENTION

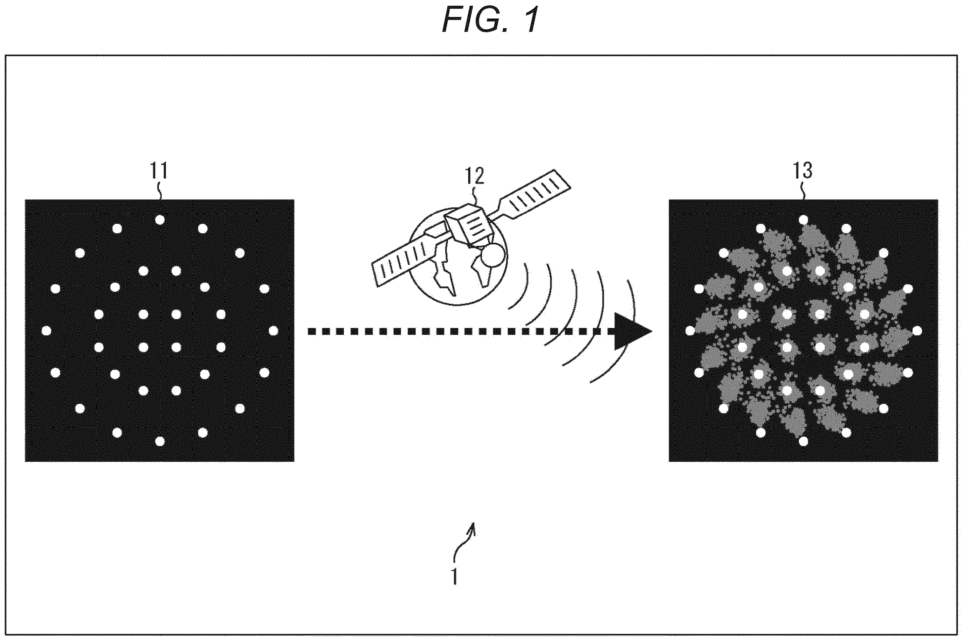

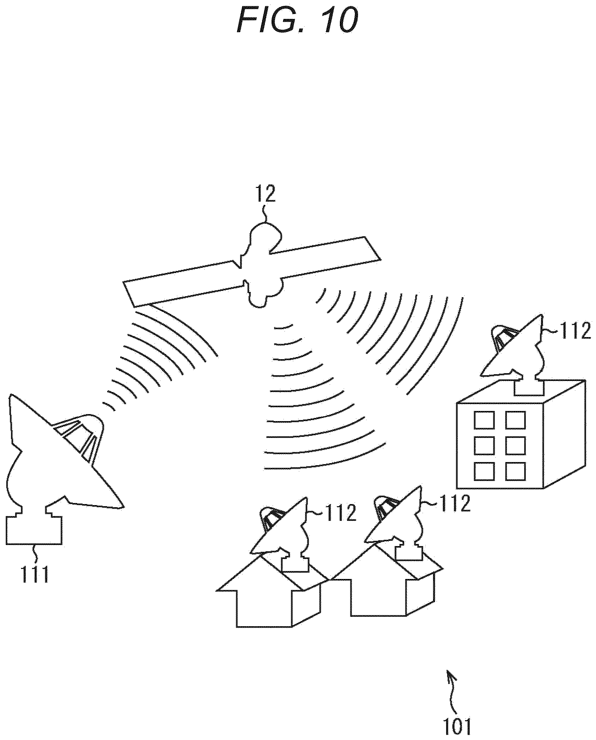

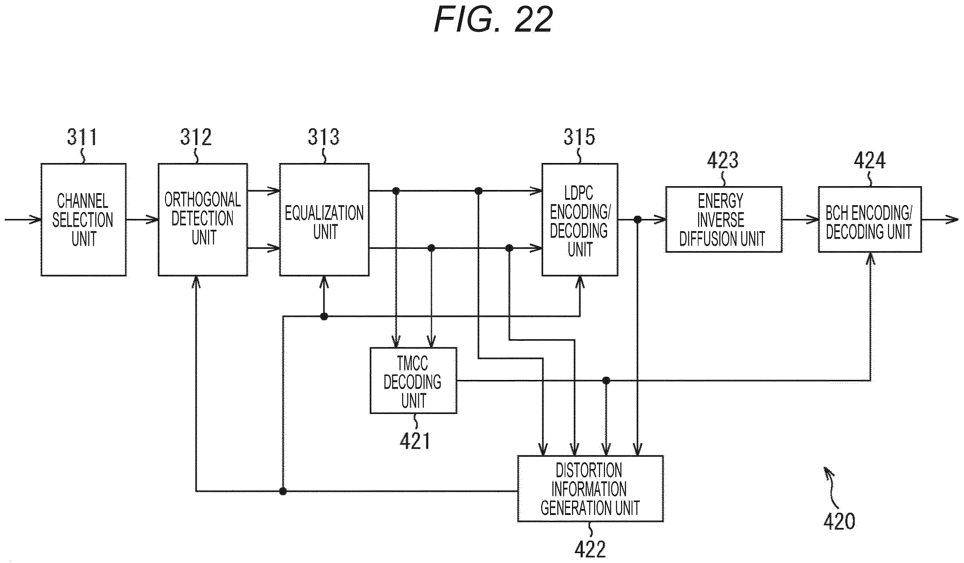

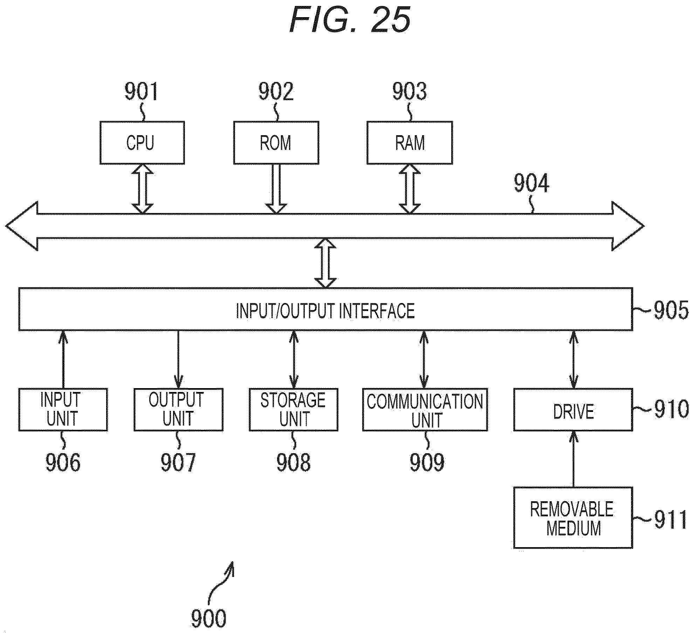

The following is a description of the background to the present disclosure and modes (hereinafter referred to as embodiments) for carrying out the present disclosure. It should be noted that explanation will be made in the following order.
0. Background to the present disclosure (Figs. 1 through 9)
1. First embodiment: transmission/reception system (Figs. 10 through 21)
2. Second embodiment: transmission/reception system (Figs. 22 through 24)
3. Third embodiment: computer (Fig. 25)

### <Background to the Present Disclosure>

### (Example of Nonlinear Influence of a Satellite Repeater)

Fig. 1 is a diagram showing an example of nonlinear influence of a satellite repeater.

As shown in Fig. 1, in a satellite broadcasting system 1, a satellite repeating device 12 receives a transmission signal 11 of satellite digital broadcasting transmitted from a transmission device (not shown), and amplifies the transmission signal 11, for example. The satellite repeating device 12 transmits the resultant signal as a reception signal 13 to a reception device (not shown). At this point, the transmission signal 11 is subjected to nonlinear influence of the satellite repeating device 12. As a result, nonlinear distortion appears in the reception signal 13.

### (Example Configuration of the Satellite Repeating Device)

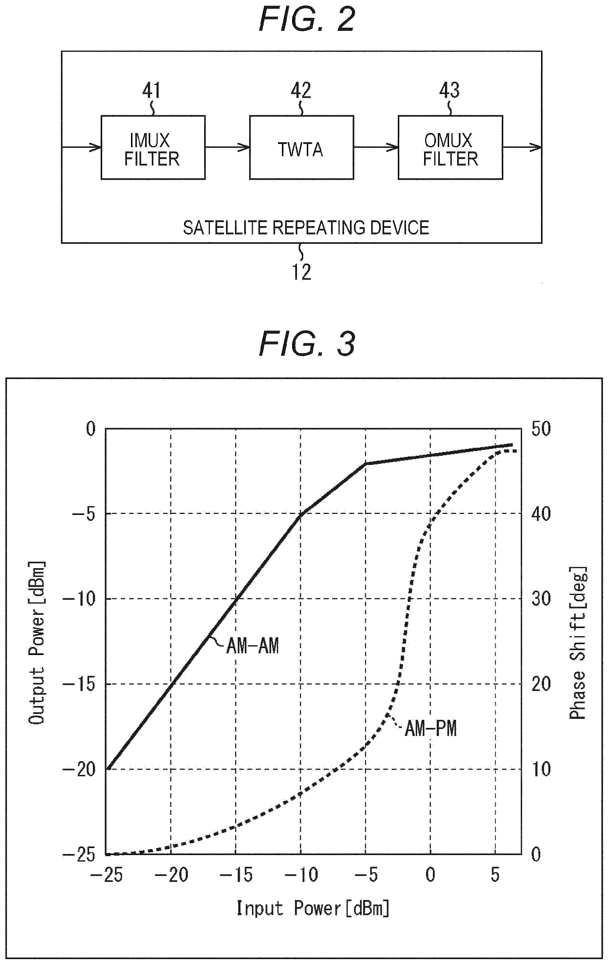

Fig. 2 is a block diagram showing an example configuration of the satellite repeating device 12 shown in Fig. 1.

The satellite repeating device 12 in Fig. 2 includes an input demultiplexer (IMUX) filter 41, a traveling wave tube amplifier (TWTA) 42, and an output multiplexer (OMUX) filter 43.

The IMUX filter 41 of the satellite repeating device 12 performs a filtering process on the transmission signal 11 transmitted from the transmission device (not shown). The IMUX filter 41 supplies the filtered signal to the TWTA 42.

The TWTA 42 amplifies the filtered signal, and supplies the filtered signal to the OMUX filter 43. The OMUX filter 43 performs a filtering process on the amplified signal supplied from the TWTA 42, to generate the reception signal 13. The reception signal 13 is transmitted to the reception device (not shown).

### (Description of the Output Characteristics of the TWTA)

Fig. 3 is a graph showing an example of the output characteristics of the TWTA 42 shown in Fig. 2.

In Fig. 3, the abscissa axis indicates the amplitude of the input signal of the TWTA 42, and the ordinate axis indicates the amplitude or the phase of the output signal. Further, the solid line indicates the relationship between the amplitude of the input signal and the amplitude of the output signal, and the dashed line indicates the relationship between the amplitude of the input signal and the phase of the output signal.

As shown in Fig. 3, as the amplitude of the input signal becomes larger, the amplitude of the output signal becomes larger with the increase in the amplitude of the input signal. However, after the value of the amplitude of the input signal has reached a predetermined value, the amplitude of the output signal is gradually saturated.

On the other hand, the phase of the output signal gradually becomes larger as the amplitude of the input signal becomes larger. After the value of the amplitude of the input signal has reached a predetermined value, the phase of the output signal rapidly becomes larger. After the value of the amplitude of the input signal has reached a greater predetermined value, the phase of the output signal is saturated.

As described above, the output characteristics of the TWTA 42 exhibit nonlinearity.

### (Respective Signal Points of the Transmission Signal)

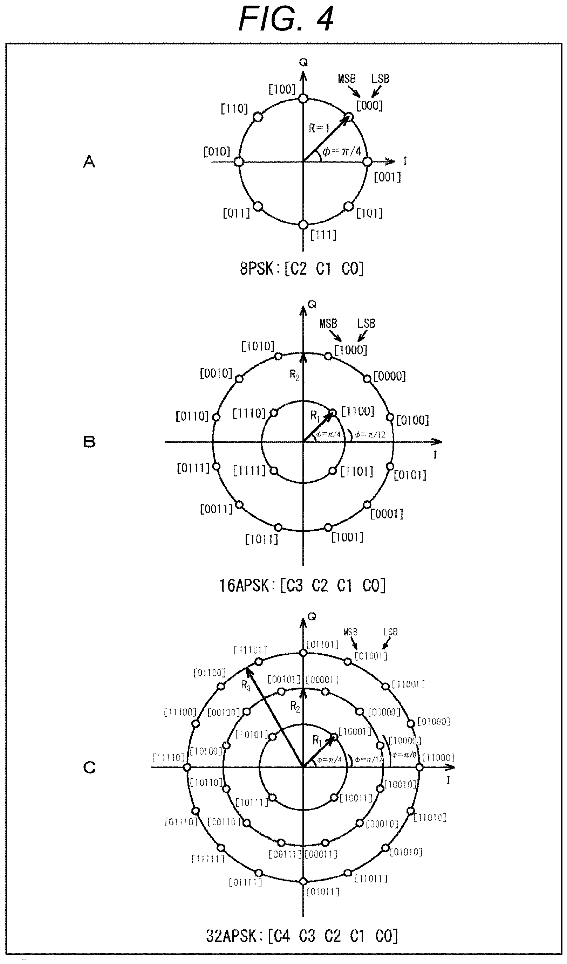

Fig. 4 is a diagram showing examples of the coordinate positions (constellation) of the respective signal points of the transmission signal 11 on the I-Q plane in cases where the transmission signal 11 is an 8PSK signal, a 16APSK signal, and a 32APSK signal.

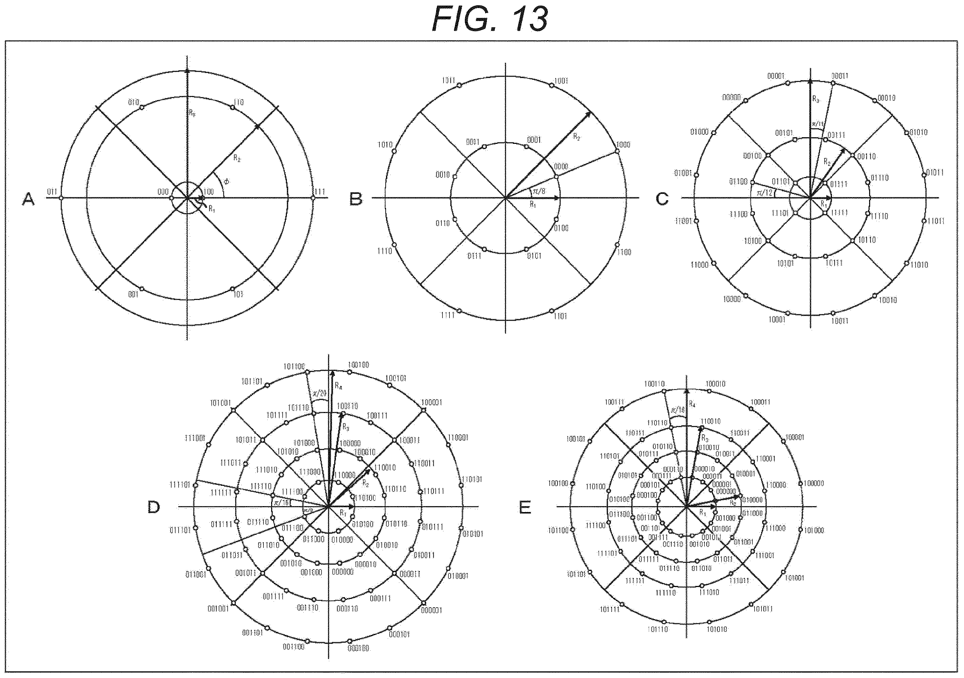

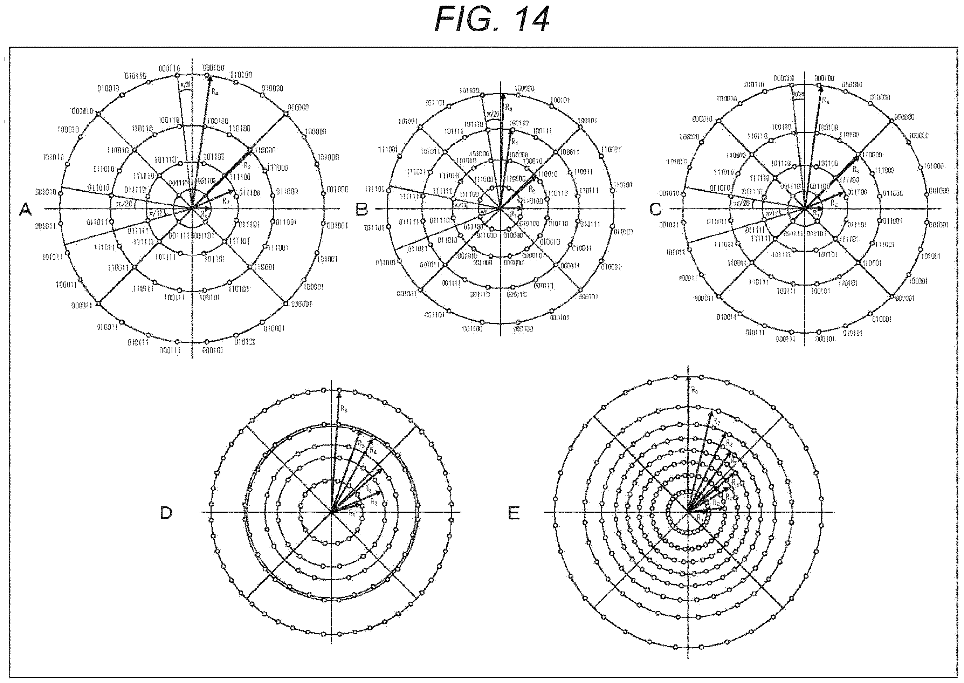

On the I-Q plane in Fig. 4, the abscissa axis is the I-axis, and the ordinate axis is the Q-axis. In the drawing, white circles represent the signal points. Meanwhile, the distance (radius) from the center point where the I-Q coordinates are (0, 0) in the drawing to a white circle representing a signal point indicates the amplitude of the signal point, and the angle ϕ between the abscissa axis and the line connecting the center point and a white circle representing a signal point indicates the phase of the signal point. The same applies to Figs. 13 and 14 described later.

As shown in A of Fig. 4, in a case where the transmission signal 11 is an 8PSK signal, eight kinds of symbols are transmitted through eight signal points that are the same in amplitude but differ from one another in phase.

As shown in B of Fig. 4, in a case where the transmission signal 11 is a 16APSK signal, on the other hand, 16 kinds of symbols are transmitted through 16 signal points that differ from one another in amplitude and/or phase. Further, as shown in C of Fig. 4, in a case where the transmission signal 11 is a 32APSK signal, 32 kinds of symbols are transmitted through 32 signal points that differ from one another in amplitude and/or phase.

### (Signal Amplified by the TWTA)

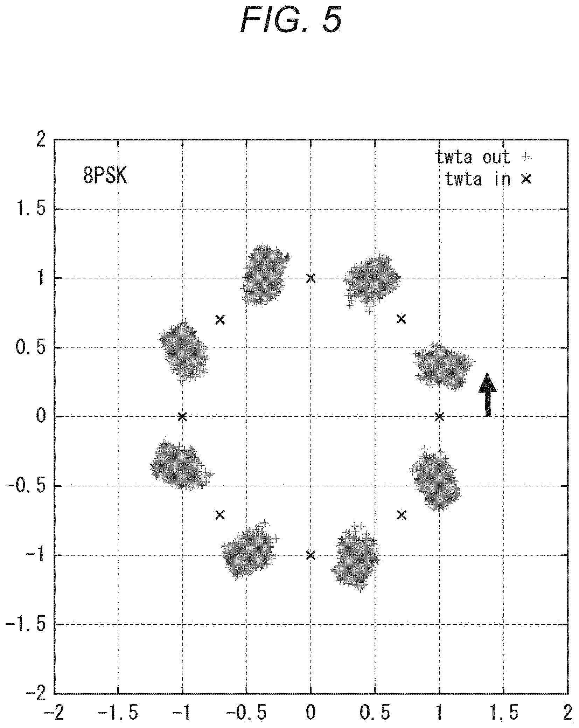

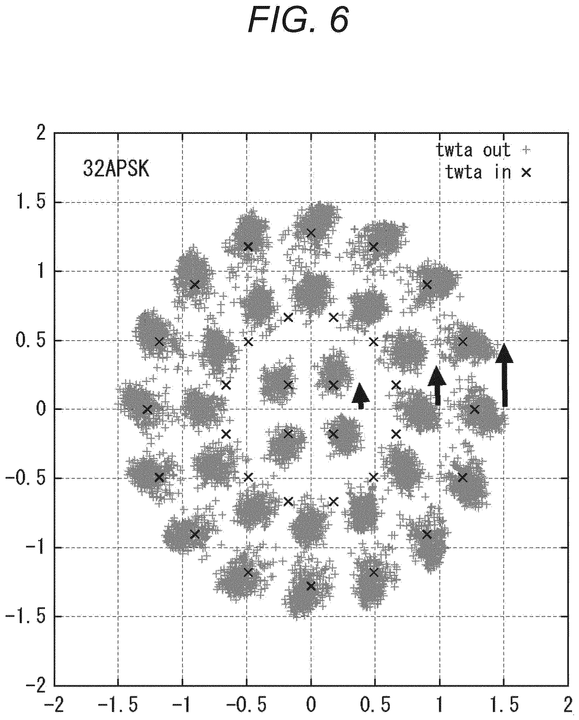

Fig. 5 is a graph showing the coordinate positions of the respective signal points of a signal amplified by the TWTA 42 on the I-Q plane in a case where the transmission signal 11 is an 8PSK signal. Further, Fig. 6 is a graph showing the coordinate positions of the respective signal points of a signal amplified by the TWTA 42 on the I-Q plane in a case where the transmission signal 11 is a 32APSK signal.

In Figs. 5 and 6, x-marks represent the signal points of the signals prior to the amplification by the TWTA 42, and +-marks represent the signal points of the signals amplified by the TWTA 42.

As shown in Fig. 5, in a case where the transmission signal 11 is an 8PSK signal, the signal points have one amplitude, and therefore, the reduction rate of the amplitude due to the TWTA 42 and the phase rotation amount are the same at all the signal points. Specifically, the distances from the center point to the coordinate positions of the respective signal points of the signal amplified by the TWTA 42 on the I-Q plane are shorter, by a constant amount, than those with respect to the signal points of the signal prior to the amplification. Also, the coordinate positions of the respective signal points of the signal amplified by the TWTA 42 on the I-Q plane are positions obtained by rotating counterclockwise the coordinate positions of the respective signal points prior to the amplification by a constant amount.

Because of this, in a case where the transmission signal 11 is a PSK signal, the coordinate positions are rotated clockwise by a constant amount, and the amplitude is adjusted. In this manner, the nonlinear distortion caused by the TWTA 42 can be corrected. Thus, no decision errors occur in the reception device, and the reception performance is not degraded.

In a case where the transmission signal 11 is a 32APSK signal, on the other hand, the signal points have more than one amplitude, as shown in Fig. 6. As the output characteristics of the TWTA 42 exhibit nonlinearity, the reduction rate of the amplitude due to the TWTA 42 and the phase rotation amount vary with the respective amplitudes of the signal points.

Specifically, the distances from the center point to the coordinate positions of the respective signal points of the signal amplified by the TWTA 42 on the I-Q plane are shorter than those with respect to the signal points of the signal prior to the amplification, by the amounts corresponding to the distances. In the example shown in Fig. 6, a signal point at a longer distance from the center point has a higher reduction rate of the distance from the center point. That is, the longer the distance from the center point becomes, the more inward the position of a signal point of the signal amplified by the TWTA 42 is pushed.

Also, the coordinate positions of the respective signal points of the signal amplified by the TWTA 42 on the I-Q plane are positions obtained by rotating counterclockwise the positions of the respective signal points prior to the amplification by the amounts corresponding to the distances from the center point to the respective signal points. In the example shown in Fig. 6, a signal point at a longer distance from the center point has a larger phase rotation amount.

As described above, in a case where the transmission signal 11 is an APSK signal, nonlinear distortion appears due to the TWTA 42. Therefore, if the reception device performs a reception process in accordance with the transmission signals of the respective signal points defined by satellite digital broadcasting standards, decision errors occur, and the reception performance is degraded.

In view of this, in the ARIB STD-B44 transmission format, transmission constellation signals that include, in predetermined order, signal points in the same constellation as that of the data section are buried in a transmission signal so as to compensate for the above described nonlinear distortion.

### (ARIB STD-B44 Transmission Format)

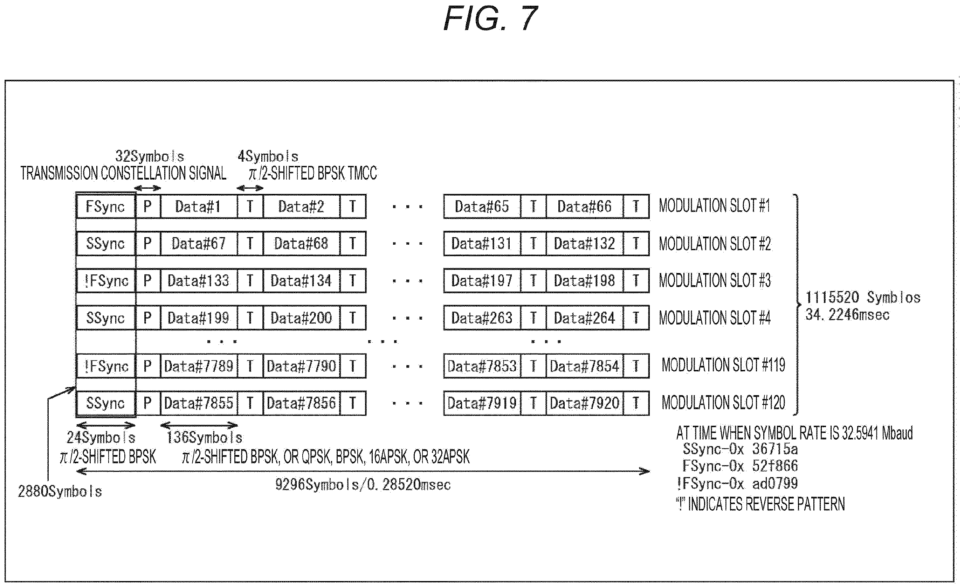

Fig. 7 is a diagram showing the transmission signal of one frame in the ARIB STD-B44 transmission format.

As shown in Fig. 7, the transmission signal of one frame in the ARIB STD-B44 transmission format is formed with 120 modulation slots. In Fig. 7, the ith modulation slot is shown as modulation slot #i.

A synchronization signal FSync, SSync, or !FSync, a transmission constellation signal P, data Data, and a burst signal T are set in each modulation slot. The synchronization signal FSync, SSync, or !FSync is a 24-symbol synchronization signal designed for synchronization.

Further, the transmission constellation signal P is a 32-symbol pilot signal for compensating for nonlinear distortion, and is a known signal including all the signal points in the same constellation as the data Data. The synchronization signal FSync, SSync, or !FSync and the transmission constellation signal P are known signals, and are defined beforehand in the ARIB STD-B44 standards.

### (Example of the Symbols of a Transmission Constellation Signal)

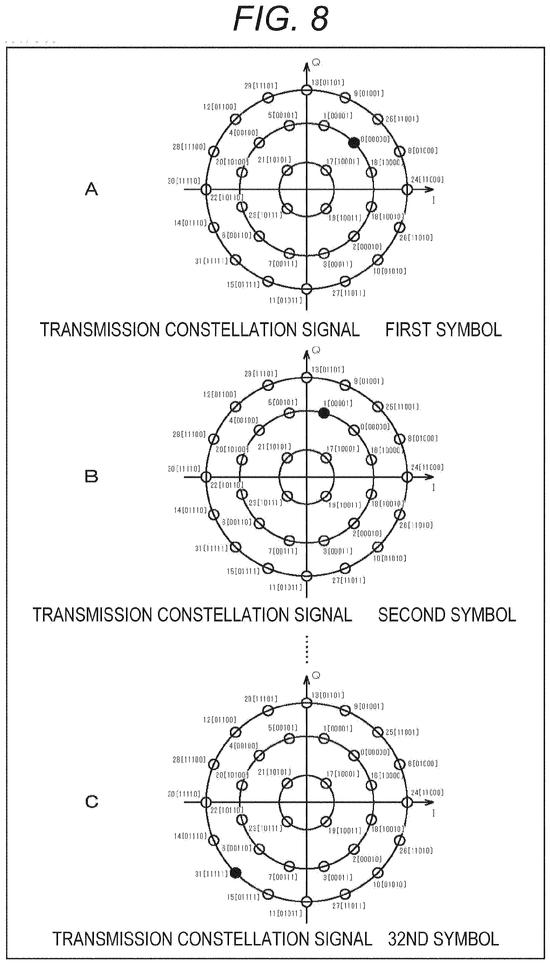

Fig. 8 is a diagram showing examples of symbols of a transmission constellation signal in a case where the modulation scheme is 32APSK.

In a case where the modulation scheme is 32APSK, signals of values 0 through 31 are sequentially set in a transmission constellation signal. Therefore, as shown in A of Fig. 8, the first symbol among the 32 symbols of a transmission constellation signal has a value 0 [00000]. As shown in B of Fig. 8, the second symbol has a value 1 [00001]. Also, as shown in C of Fig. 8, the 32nd symbol has a value 31 [11111].

It should be noted that, in this specification, a modulation scheme indicates not only a scheme such as QPSK, 8PSK, 16PSK, or 32APSK, but also a code rate. Therefore, where the modulation scheme is the same, the scheme such as QPSK, 8PSK, 16PSK, or 32APSK, and the code rate are the same. Where the modulation scheme is the same, the constellation is the same.

### (Description of Compensation for Nonlinear Distortion)

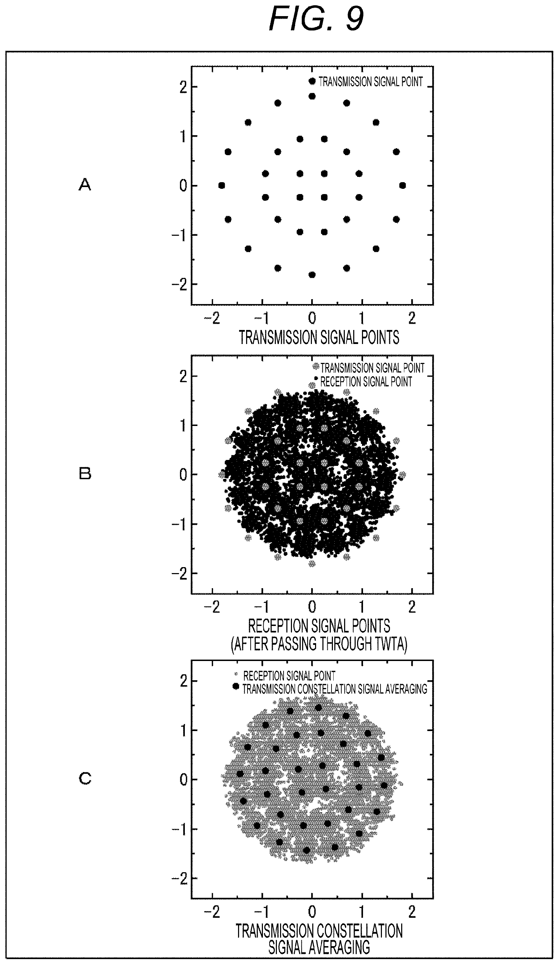

Fig. 9 is a diagram for explaining the nonlinear distortion compensation to be performed by the reception device using the transmission constellation signal shown in Fig. 8.

It should be noted that Fig. 9 shows the I-Q plane.

The respective signal points (transmission signal points) of the transmission constellation signal that is included in the transmission signal 11 and has been modulated by 32APSK as shown in A of Fig. 9 are converted into the signal points (reception signal points) shown in B of Fig. 9 by the satellite repeating device 12. The reception device receives the reception signal including the transmission constellation signal having the signal points shown in B of Fig. 9, averages the received transmission constellation signal at each signal point, and sets the averaged transmission constellation signal as the signal of the signal point. In this manner, the reception device compensates for nonlinear distortion.

The reception device can improve its reception performance by performing such nonlinear distortion compensation when performing a hard decision process or a soft decision process on the reception signal 13.

However, in a case where the reception signal 13 does not include known signals that are all the signal points in the same constellation as that of the data section, like transmission constellation signals, the reception device cannot performs the above nonlinear distortion compensation. Therefore, the present disclosure is to improve the reception performance by compensating for nonlinear distortion, with respect to a reception signal that does not include known signals that are all the signal points in the same constellation as that of the data section.

### <First Embodiment>

### (Example Configuration of a First Embodiment of a Transmission/Reception System)

Fig. 10 is a block diagram showing an example configuration of a first embodiment of a transmission/reception system to which the present disclosure is applied.

In the configuration shown in Fig. 10, the same components as those shown in Fig. 1 are denoted by the same reference numerals as those used in Fig. 1. The explanations that have already been made will not be repeated.

The transmission/reception system 101 shown in Fig. 10 includes a transmission device 111, a satellite repeating device 12, and reception devices 112. The transmission/reception system 101 causes the reception devices 112 to receive transmission signals transmitted from the transmission device 111 via the satellite repeating device 12.

Specifically, the transmission device 111 of the transmission/reception system 101 is installed at a transmitter station. The transmission device 111 transmits a broadcast signal of satellite digital television broadcasting in a transmission format such as the DVB-S2 or DVB-S2X format, as a transmission signal to the satellite repeating device 12.

The satellite repeating device 12 performs a filtering process and an amplification process on the transmission signal transmitted from the transmission device 111, and transmits the resultant signal to the reception devices 112.

The reception devices 112 are installed in general users' residences and at a terrestrial broadcasting station. The reception devices 112 receive the signal transmitted from the satellite repeating device 12 as a reception signal. The reception devices 112 perform a reception process on the reception signal. At this point, the reception devices 112 compensate for nonlinear distortion in the reception signal.

### (DVB-S2 or DVB-S2X Transmission Format)

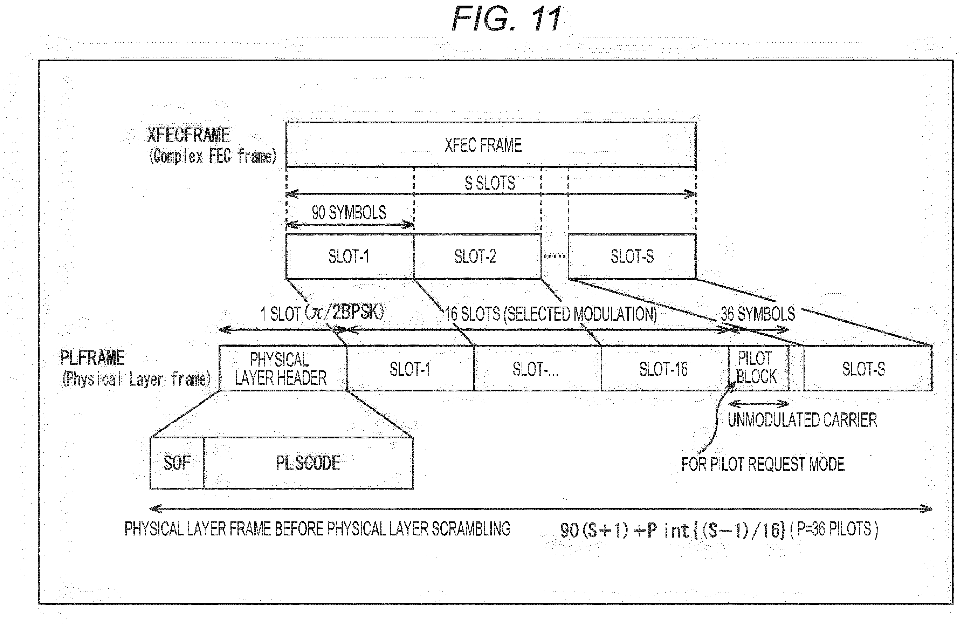

Fig. 11 is a diagram showing an example of the transmission signal of one frame in the DVB-S2 or DVB-S2X transmission format.

As shown in Fig. 11, the data section of the transmission signal of one frame in the DVB-S2 or DVB-S2X transmission format is formed with S slots, and each slot is formed with a 90-symbol signal. Also, each slot is modulated by a selected modulation scheme, such as 8PSK, and a 36-symbol pilot block that is an unmodulated carrier is set for each 16 slots as necessary.

Further, a physical layer header (PL header) is provided before the S slots. The physical layer header is modulated by π/2BPSK (Binary Phase Shift Keying), and is formed with SOF and PLSCODE. SOF is a 24-symbol signal indicating the start of the frame, and PLSCODE is a 64-symbol signal indicating transmission control information, the modulation scheme for the data section, and the like.

As described above, no known signals including all the signal points in the same constellation as that of the data section exist in the transmission signal of one frame in the DVB-S2 or DVB-S2X transmission format.

### (Respective Signal Points of π/2BPSK)

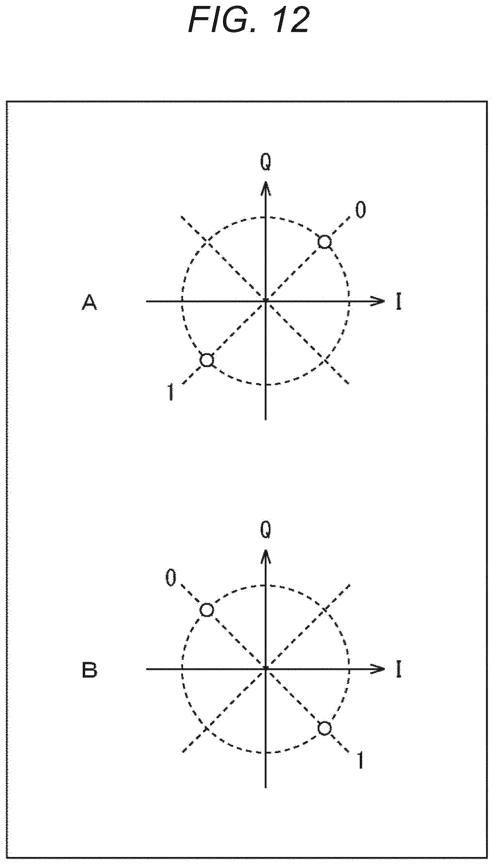

Fig. 12 is a diagram showing the coordinate positions of respective signal points of π/2BPSK on the I-Q plane.

A of Fig. 12 shows the respective signal points of an odd-numbered symbol. B of Fig. 12 shows the respective signal points of an even-numbered symbol.

As shown in A of Fig. 12 and B of Fig. 12, by π/2BPSK, the phases of the signal points of the value 0 and the value 1 differ from each other by 180 degrees, and the phases of the signal point of an odd-numbered symbol and the signal point of an even-numbered symbol of each value differ from each other by 90 degrees.

### (Respective Signal Points of a Transmission Signal in the DVB-S2X Transmission Format)

The modulation schemes for transmission signals in the DVB-S2X transmission format include modulation schemes in which the coordinate positions of respective signal points on the I-Q plane differ from the positions shown in Fig. 4. Figs. 13 and 14 are diagrams showing examples of the coordinate positions, on the I-Q plane, of respective signal points of the modulation scheme of transmission signals in the DVB-S2X transmission format, in which the coordinate positions of the respective signal points on the I-Q plane differ from the positions shown in Fig. 4.

As shown in A of Fig. 13, one of the modulation schemes for transmission signals in the DVB-S2X transmission format is an 8APSK (2 + 4 + 2APSK) scheme by which eight symbols are transmitted through signal points of three different amplitudes. By this 8APSK scheme, two symbols are transmitted through the signal points of the smallest amplitude, four symbols are transmitted through the signal points of the second smallest amplitude, and two symbols are transmitted through the signal points of the largest amplitude.

As shown in B of Fig. 13, there also is a 16APSK (8 + 8APSK) scheme by which 16 symbols are transmitted through signal points of two different amplitudes. By this 16APSK scheme, eight symbols are transmitted through the signal points of each of the two amplitudes.

Further, as shown in C of Fig. 13, there also is a 32APSK (4 + 12 + 16APSK) scheme by which 32 symbols are transmitted through signal points of three different amplitudes. By this 32APSK scheme, four symbols are transmitted through the signal points of the smallest amplitude, 12 symbols are transmitted through the signal points of the second smallest amplitude, and 16 symbols are transmitted through the signal points of the largest amplitude.

As shown in D of Fig. 13, there also is a 32APSK (8 + 16 + 20 + 20APSK) scheme by which 32 symbols are transmitted through signal points of four different amplitudes. By this 32APSK scheme, eight symbols are transmitted through the signal points of the smallest amplitude, 16 symbols are transmitted through the signal points of the second smallest amplitude, 20 symbols are transmitted through the signal points of the third smallest amplitude, and 20 symbols are transmitted through the signal points of the largest amplitude.

Further, as shown in E of Fig. 13, there also is a 64APSK (16 + 16 + 16 + 16APSK) scheme by which 64 symbols are transmitted through signal points of four different amplitudes. By this 64APSK scheme, 16 symbols are transmitted through the signal points of each of the four amplitudes.

As shown in A of Fig. 14, there also is a 64APSK (4 + 12 + 20 + 28APSK) scheme by which 64 symbols are transmitted through signal points of four different amplitudes. By this 64APSK scheme, four symbols are transmitted through the signal points of the smallest amplitude, 12 symbols are transmitted through the signal points of the second smallest amplitude, 20 symbols are transmitted through the signal points of the third smallest amplitude, and 28 symbols are transmitted through the signal points of the largest amplitude.

Further, as shown in B of Fig. 14, there also is a 64APSK (8 + 16 + 20 + 20APSK) scheme by which 64 symbols are transmitted through signal points of four different amplitudes. By this 64APSK scheme, eight symbols are transmitted through the signal points of the smallest amplitude, 16 symbols are transmitted through the signal points of the second smallest amplitude, 20 symbols are transmitted through the signal points of the third smallest amplitude, and 20 symbols are transmitted through the signal points of the largest amplitude.

As shown in C of Fig. 14, there also is a 64APSK (4 + 12 + 20 + 28APSK) scheme by which 64 symbols are transmitted through signal points of four different amplitudes. By this 64APSK scheme, four symbols are transmitted through the signal points of the smallest amplitude, 12 symbols are transmitted through the signal points of the second smallest amplitude, 20 symbols are transmitted through the signal points of the third smallest amplitude, and 28 symbols are transmitted through the signal points of the largest amplitude.

Further, as shown in D of Fig. 14, there also is a 128APSK (16 + 16 + 16 + 16 + 16 + 48APSK) scheme by which 128 symbols are transmitted through signal points of six different amplitudes. By this 128APSK scheme, 16 symbols are transmitted through the signal points of each of the five amplitudes excluding the largest amplitude, and 48 symbols are transmitted through the signal points of the largest amplitude.

As shown in E of Fig. 14, there also is a 256APSK (32 + 32 + 32+ 32 + 32 + 32 + 32+ 32APSK) scheme by which 256 symbols are transmitted through signal points of eight different amplitudes. By this 256APSK scheme, 32 symbols are transmitted through the signal points of each of the eight amplitudes.

### (Example Configuration of a Reception Device)

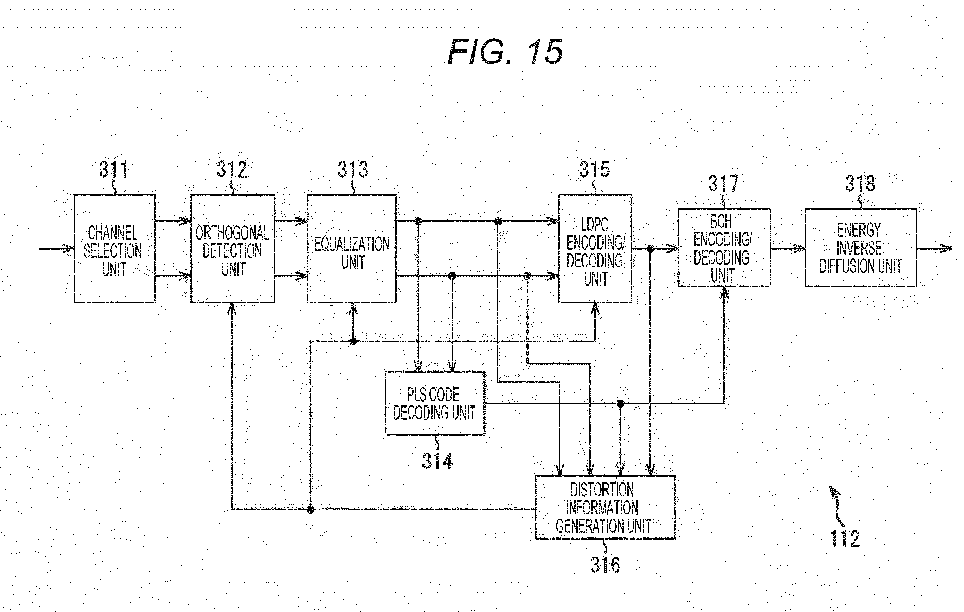

Fig. 15 is a block diagram showing an example configuration of a reception device 112 shown in Fig. 10.

The reception device 112 shown in Fig. 15 includes a channel selection unit 311, an orthogonal detection unit 312, an equalization unit 313, a PLS code decoding unit 314, a low density parity check (LDPC) encoding/decoding unit 315, a distortion information generation unit 316, a BCH encoding/decoding unit 317, and an energy inverse diffusion unit 318.

The channel selection unit 311 receives a signal transmitted from the satellite repeating device 12 as a reception signal. The channel selection unit 311 performs frequency conversion on the reception signal, and selects the intermediate frequency (IF) signal of the channel designated by a user or the like, from the obtained IF signals. The channel selection unit 311 performs processing such as orthogonal demodulation and A/D conversion on the selected IF signal, and supplies the resultant I-signal and Q-signal to the orthogonal detection unit 312.

The orthogonal detection unit 312 performs phase error correction and the like on the I-signal and Q-signal supplied from the channel selection unit 311. At this point, the orthogonal detection unit 312 compensates for the nonlinear distortion caused by the satellite repeating device 12, in accordance with distortion information supplied from the distortion information generation unit 316. The orthogonal detection unit 312 supplies the I-signal and Q-signal subjected to the phase error correction, to the equalization unit 313.

The equalization unit 313 is formed with a decision feedback equalizer (DFE), for example, and performs an equalization process on the I-signal and Q-signal supplied from the orthogonal detection unit 312. At this point, the equalization unit 313 compensates for the nonlinear distortion caused by the satellite repeating device 12, in accordance with distortion information supplied from the distortion information generation unit 316. The equalization unit 313 supplies the equalized I-signal and Q-signal to the PLS code decoding unit 314, the LDPC encoding/decoding unit 315, and the distortion information generation unit 316.

The PLS code decoding unit 314 decodes the I-signal and Q-signal supplied from the equalization unit 313, into a PLS code including the modulation scheme of the data section in the reception signal and the like. The PLS code decoding unit 314 supplies the decoding result to the distortion information generation unit 316 and the BCH encoding/decoding unit 317.

The LDPC encoding/decoding unit 315 performs an LDPC encoding/decoding process as an FEC process. Specifically, the LDPC encoding/decoding unit 315 prepares a likelihood table for each of the bits forming the symbols compliant with the current modulation scheme (for example, for each five bits in a case where the modulation scheme is 32APSK). For the signal point indicated by the I-signal and Q-signal supplied from the equalization unit 313, the LDPC encoding/decoding unit 315 determines the log likelihood ratio LLR between the probability that each of the bits forming the symbols is 1 and the probability that each of the bits is 0, in accordance with the likelihood table. The LDPC encoding/decoding unit 315 then performs LDPC encoding/decoding on this log likelihood ratio LLR. At this point, the LDPC encoding/decoding unit 315 compensates for the nonlinear distortion caused by the satellite repeating device 12, in accordance with distortion information supplied from the distortion information generation unit 316. The LDPC encoding/decoding unit 315 supplies the data obtained as a result of the LDPC encoding/decoding process (the LPDC-decoded data and the LDPC parity), to the distortion information generation unit 316 and the BCH encoding/decoding unit 317.

The distortion information generation unit 316 modulates the data that is supplied from the LDPC encoding/decoding unit 315 and has been subjected to the LDPC encoding/decoding process, by a modulation scheme included in the PLS code supplied from the PLS code decoding unit 314. In this manner, the distortion information generation unit 316 generates a modulated signal. For each modulation scheme indicated by the PLS code and each constellation point of a modulated signal, the distortion information generation unit 316 generates an average signal by averaging the I-signal and the Q-signal that are of the same time as the modulated signal, are supplied from the equalization unit 313, and have not been subjected to the LDPC encoding/decoding process.

For each modulation scheme, the distortion information generation unit 316 sets the constellation points of a modulated signal as estimated values of the respective constellation points of the transmission signal, and sets the constellation points of the average signal corresponding to the above constellation points as the constellation points of the reception signal. In this manner, the distortion information generation unit 316 generates distortion information indicating the nonlinear distortion that has occurred with respect to a modulated signal in each constellation point.

It should be noted that, here, the distortion information is the orthogonal coordinates or the polar coordinates (hereinafter collectively referred to simply as the coordinates) of the position of the average signal corresponding to each constellation point of a modulated signal on the I-Q plane. In this case, when the modulation scheme is 32APSK, for example, the distortion information is 64 (= 32 × 2) pieces of information formed with 32 sets of coordinates.

The distortion information is not limited to the above, and may be the coordinates of the position on the I-Q plane of the average signal corresponding to a representative constellation point that represents the respective amplitudes of all the constellation points, for example. In this case, when the modulation scheme is 32APSK, for example, the distortion information is six (= 3 × 2) pieces of information formed with three sets of coordinates.

Alternatively, where the position of the average signal corresponding to one constellation point on the I-Q plane is the reference position, the distortion information may be the coordinates that indicate the relative positions of the average signals corresponding to the other respective constellation points on the I-Q plane. In this case, when the modulation scheme is 32APSK, for example, the distortion information is 62 (= 31 × 2) pieces of information formed with 31 sets of coordinates.

Further, where the position of the average signal corresponding to one of representative constellation points on the I-Q plane is the reference position, the distortion information may be the coordinates that indicate the relative positions of the average signals corresponding to the other respective constellation points on the I-Q plane. In this case, when the modulation scheme is 32APSK, for example, the distortion information is four (= 2 × 2) pieces of information formed with two sets of coordinates.

Alternatively, the distortion information may be a graph showing output characteristics as in Fig. 3, where a modulated signal in each constellation is the input signal, and the average signal corresponding to the constellation is the output signal.

The distortion information generation unit 316 supplies the distortion information of a modulation scheme included in the current PLS code, to the orthogonal detection unit 312, the equalization unit 313, and the LDPC encoding/decoding unit 315.

In accordance with the PLS code supplied from the PLS code decoding unit 314, the BCH encoding/decoding unit 317 performs BCH encoding/decoding on the data supplied from the LDPC encoding/decoding unit 315, and supplies the decoding result to the energy inverse diffusion unit 318.

The energy inverse diffusion unit 318 performs energy inverse diffusion on the decoding result supplied from the BCH encoding/decoding unit 317, and outputs the result.

### (Example Configuration of the Orthogonal Detection Unit)

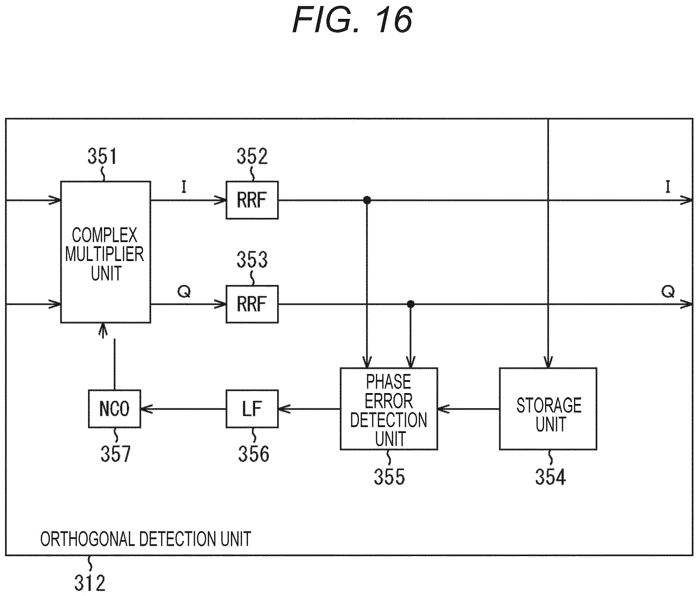

Fig. 16 is a block diagram showing an example configuration of the orthogonal detection unit 312 shown in Fig. 15.

The orthogonal detection unit 312 shown in Fig. 16 includes a complex multiplier unit 351, a route roll-off filters (RRFs) 352 and 353, a storage unit 354, a phase error detection unit 355, a loop filter (LF) 356, and a numerically controlled oscillator (NCO) 357.

The complex multiplier unit 351 generates an I-signal and a Q-signal by multiplying each of the I-signal and Q-signal supplied from the channel selection unit 311 shown in Fig. 15 by a signal supplied from the NCO 357. The complex multiplier unit 351 supplies the generated I-signal to the RRF 352, and supplies the Q-signal to the RRF 353.

The RRF 352 performs a filtering process on the I-signal supplied from the complex multiplier unit 351, to remove noise. The RRF 352 supplies the filtered I-signal to the phase error detection unit 355 and the equalization unit 313 shown in Fig. 15.

The RRF 353 performs a filtering process on the Q-signal supplied from the complex multiplier unit 351, to remove noise. The RRF 353 supplies the filtered Q-signal to the phase error detection unit 355 and the equalization unit 313.

The storage unit 354 stores the distortion information supplied from the distortion information generation unit 316 shown in Fig. 15.

The phase error detection unit (a hard decision unit) 355 performs a hard decision process to read, from the storage unit 354, the coordinates of the average signal closest to a signal formed with the I-signal supplied from the RRF 352 and the Q-signal supplied from the RRF 353 on the I-Q plane. The phase error detection unit 355 (the hard decision unit) performs a phase error detection process to detect a phase error between the signal with the read coordinates and the signal formed with the I-signal supplied from the RRF 352 and the Q-signal supplied from the RRF 353. The phase error detection unit 355 supplies the detected phase error to the LF 356.

As described above, the phase error detection unit 355 detects a phase error, in accordance with the distortion information, instead of a signal of a signal point defined beforehand in the DVB-S2 or DVB-S2X standards or the like. Accordingly, the nonlinear distortion caused at the satellite repeating device 12 is compensated for, and the phase synchronization performance is improved.

The LF 356 performs a filter process on the phase error detected by the phase error detection unit 355, and supplies the result to the NCO 357.

In accordance with the phase error supplied from the LF 356, the NCO 357 generates a signal at a predetermined frequency, and supplies the signal to the complex multiplier unit 351.

### (Example Configuration of the Equalization Unit)

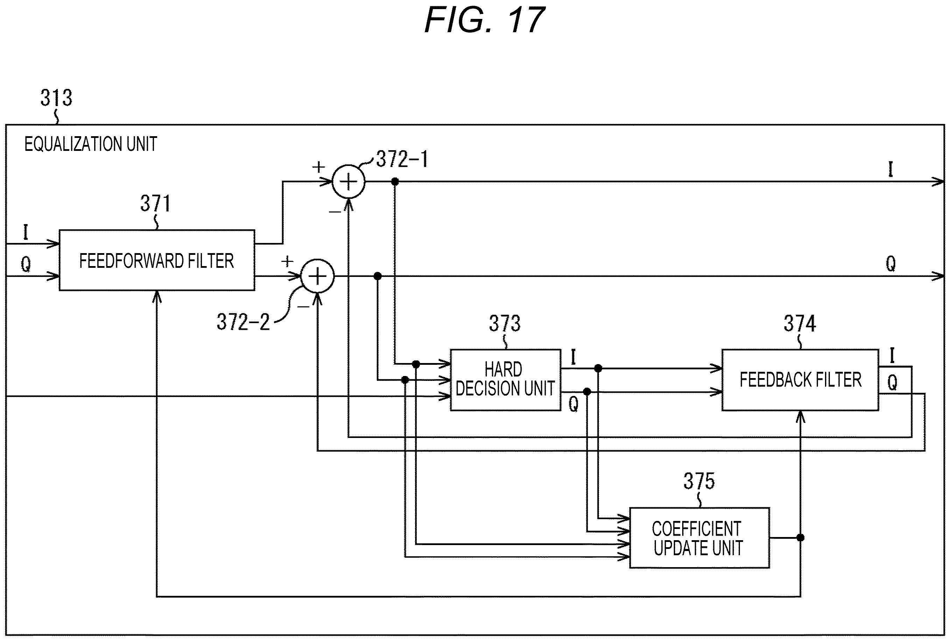

Fig. 17 is a block diagram showing an example configuration of the equalization unit 313 shown in Fig. 15.

The equalization unit 313 shown in Fig. 17 includes a feedforward filter 371, subtraction units 372-1 and 372-2, a hard decision unit 373, a feedback filter 374, and a coefficient update unit 375.

The feedforward filter 371 of the equalization unit 313 is a variable coefficient filter. The feedforward filter 371 performs a convolution operation between each of the I-signal and Q-signal supplied from the orthogonal detection unit 312 shown in Fig. 15 and the coefficient supplied from the coefficient update unit 375. The feedforward filter 371 outputs the I-signal obtained as a result of the convolution operation to the subtraction unit 372-1, and outputs the Q-signal to the subtraction unit 372-2.

The subtraction unit 372-1 subtracts the I-signal supplied from the feedback filter 374, from the I-signal supplied from the feedforward filter 371. The subtraction unit 372-1 supplies the resultant I-signal as the equalized I-signal to the LDPC encoding/decoding unit 315 shown in Fig. 15, and to the hard decision unit 373 and the coefficient update unit 375. The subtraction unit 372-2 subtracts the Q-signal supplied from the feedback filter 374, from the Q-signal supplied from the feedforward filter 371. The subtraction unit 372-2 supplies the resultant Q-signal as the equalized Q-signal to the LDPC encoding/decoding unit 315, and to the hard decision unit 373 and the coefficient update unit 375.

In accordance with the distortion information supplied from the distortion information generation unit 316 shown in Fig. 15, the hard decision unit 373 makes a hard decision on the equalized I-signal supplied from the subtraction unit 372-1 and the equalized Q-signal supplied from the subtraction unit 372-2. That is, the hard decision unit 373 determines the signal point corresponding to the coordinates closest to the coordinates indicated by the equalized I-signal and Q-signal among the coordinates indicated by the distortion information.

As described above, the hard decision unit 373 makes a hard decision in accordance with the distortion information, instead of each constellation defined beforehand in the DVB-S2 or DVB-S2X standards or the like. Accordingly, the nonlinear distortion caused at the satellite repeating device 12 is compensated for, and the equalization performance is improved. The hard decision unit 373 supplies the I-signal and the Q-signal of the signal point obtained as a result of the hard decision, to the feedback filter 374 and the coefficient update unit 375.

The feedback filter 374 is a variable coefficient filter. The feedback filter 374 performs a convolution operation between each of the I-signal and Q-signal supplied from the hard decision unit 373 and the coefficient supplied from the coefficient update unit 375. The feedback filter 374 outputs the I-signal obtained as a result of the convolution operation to the subtraction unit 372-1, and outputs the Q-signal to the subtraction unit 372-2.

The coefficient update unit 375 subtracts the I-signal supplied from the hard decision unit 373, from the I-signal supplied from the subtraction unit 372-1. The coefficient update unit 375 also subtracts the Q-signal supplied from the hard decision unit 373, from the Q-signal supplied from the subtraction unit 372-2. The coefficient update unit 375 performs a least mean square (LMS) operation in accordance with the I-signal and Q-signal obtained as a result of the subtractions, and updates the coefficient to be supplied to the feedforward filter 371 and the feedback filter 374.

### (Example Configuration of the LDPC Encoding/Decoding Unit)

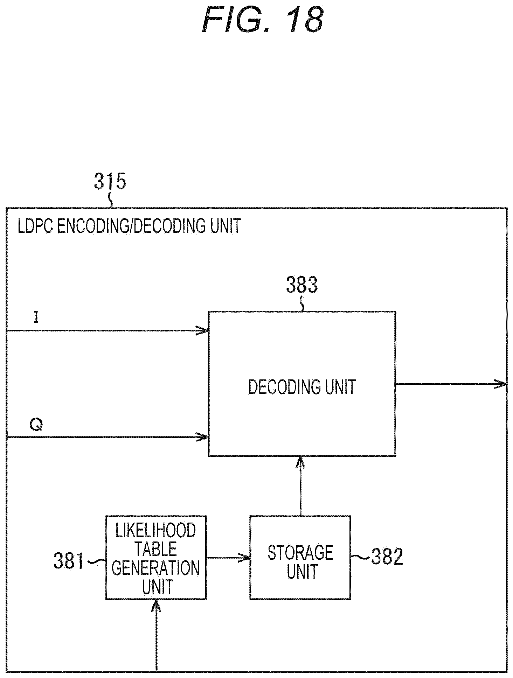

Fig. 18 is a block diagram showing an example configuration of the LDPC encoding/decoding unit 315 shown in Fig. 15.

The LDPC encoding/decoding unit 315 shown in Fig. 18 includes a likelihood table generation unit 381, a storage unit 382, and a decoding unit 383.

The likelihood table generation unit 381 calculates the log likelihood ratio LLR of each of the bits constituting the binary sequence (symbols) mapped on the respective signal points, with ideal signals of the respective signal points being the respective average signals indicated by the distortion information supplied from the distortion information generation unit 316 shown in Fig. 15. For each of the bits forming the symbols, the likelihood table generation unit 381 generates a likelihood table in which each signal point is associated with the log likelihood ratio LLR of the bit of the signal point, and supplies the likelihood table to the storage unit 382.

The storage unit 382 stores the likelihood table supplied from the likelihood table generation unit 381.

The decoding unit 383 reads the likelihood table from the storage unit 382. Using the read likelihood table, the decoding unit 383 (a soft decision unit) performs an LDPC encoding/decoding process that is a soft decision process. Specifically, for the signal point indicated by the I-signal and Q-signal supplied from the equalization unit 313 shown in Fig. 15, the decoding unit 383 determines the log likelihood ratio LLR between the probability that each of the bits forming the symbols is 1 and the probability that each of the bits is 0, using the likelihood table. The decoding unit 383 then performs LDPC encoding/decoding on this log likelihood ratio LLR. The decoding unit 383 supplies the data obtained as a result to the distortion information generation unit 316 and the BCH encoding/decoding unit 317 shown in Fig. 15.

As described above, the LDPC encoding/decoding unit 315 generates a likelihood table in accordance with the distortion information, instead of a signal of a signal point defined beforehand in the DVB-S2 or DVB-S2X standards or the like. Accordingly, the nonlinear distortion caused at the satellite repeating device 12 is compensated for, and the error correction performance is improved.

### (Example Configuration of the Distortion Information Generation Unit)

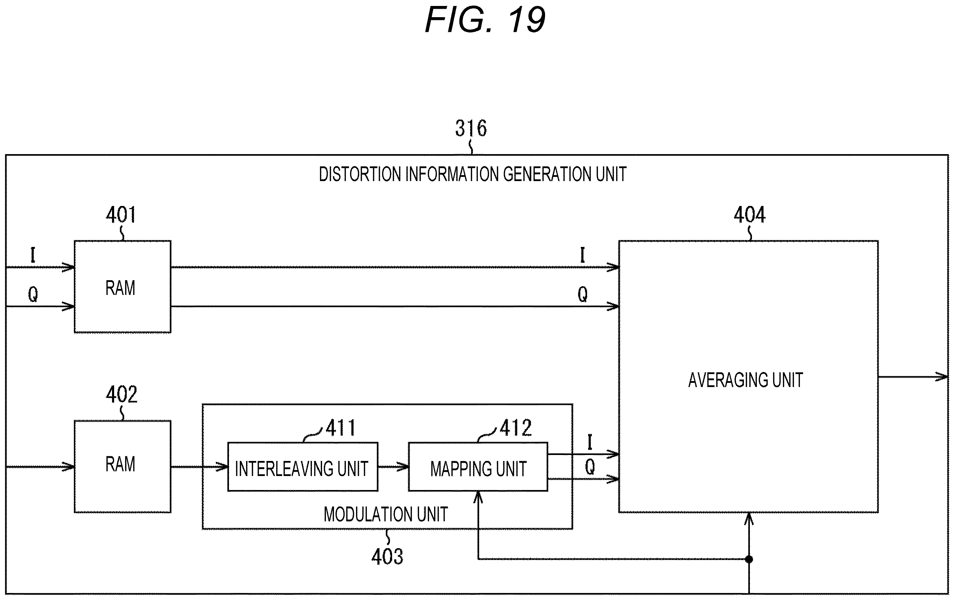

Fig. 19 is a block diagram showing an example configuration of the distortion information generation unit 316 shown in Fig. 15.

The distortion information generation unit 316 shown in Fig. 19 includes random access memories (RAMs) 401 and 402, a modulation unit 403, and an averaging unit 404.

The RAM 401 stores the I-signal and Q-signal that are supplied from the equalization unit 313 shown in Fig. 15, and have not been subjected to the FEC process. The RAM 402 stores the data supplied from the LDPC encoding/decoding unit 315.

The modulation unit 403 includes an interleaving unit 411 and a mapping unit 412. The modulation unit 403 modulates the data stored in the RAM 402 by the modulation scheme of the data section included in the PLS code supplied from the PLS code decoding unit 314 shown in Fig. 15, or by the same modulation scheme as the modulation scheme of the data section in the transmission device 111. In this manner, the modulation unit 403 generates a modulated signal.

Specifically, the interleaving unit 411 reads, from the RAM 402, the data of the I-signal and Q-signal that have been subjected to the LDPC encoding/decoding process and been read from the RAM 401. The interleaving unit 411 performs bit interleaving on the read data, and supplies the resultant data to the mapping unit 412.

The mapping unit 412 performs mapping on the data supplied from the interleaving unit 411 by a modulation scheme included in the PLS code, and generates the I-signal and the Q-signal of the signal point of the transmission signal corresponding to the data. The mapping unit 412 supplies the generated I-signal and Q-signal as a modulated signal to the averaging unit 404.

The averaging unit 404 reads the I-signal and the Q-signal from the RAM 401. For each modulation scheme indicated by the PLS code supplied from the PLS code decoding unit 314 and each constellation point of a modulated signal, the averaging unit 404 generates an average signal by averaging the read I-signal and Q-signal that are of the same time as the modulated signal. For each modulation scheme, the averaging unit 404 sets the respective constellation points of a modulated signal as estimated values of the constellation points of the transmission signal, and sets the constellation points of the average signal corresponding to the above constellation points as the constellation points of the reception signal. In this manner, the averaging unit 404 generates the distortion information.

The averaging unit 404 supplies the distortion information of a modulation scheme included in the current PLS code in the generated distortion information, to the orthogonal detection unit 312, the equalization unit 313, and the LDPC encoding/decoding unit 315 shown in Fig. 15.

### (Description of a Process to be Performed by the Reception Device)

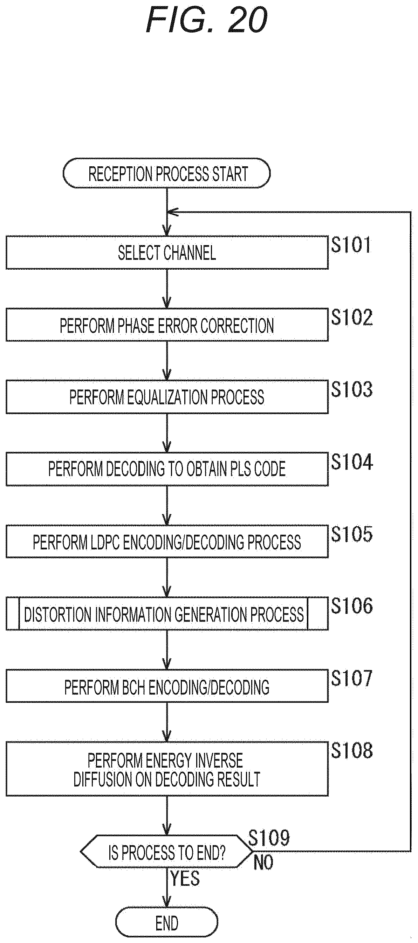

Fig. 20 is a flowchart for explaining a reception process to be performed by the reception device 112 shown in Fig. 15.

In step S101 in Fig. 20, the channel selection unit 311 performs frequency conversion on a reception signal received from the satellite repeating device 12 shown in Fig. 10, and selects the IF signal of the channel designated by a user or the like from among the obtained IF signals. The channel selection unit 311 performs processing such as orthogonal demodulation and A/D conversion on the selected IF signal, and supplies the resultant I-signal and Q-signal to the orthogonal detection unit 312.

In step S102, the orthogonal detection unit 312 performs phase error correction and the like on the I-signal and Q-signal supplied from the channel selection unit 311. At this point, the orthogonal detection unit 312 compensates for the nonlinear distortion caused by the satellite repeating device 12, in accordance with distortion information supplied from the distortion information generation unit 316. The orthogonal detection unit 312 supplies the I-signal and Q-signal subjected to the phase error correction, to the equalization unit 313.

In step S103, the equalization unit 313 performs an equalization process on the I-signal and Q-signal supplied from the orthogonal detection unit 312. At this point, the equalization unit 313 compensates for the nonlinear distortion caused by the satellite repeating device 12, in accordance with distortion information supplied from the distortion information generation unit 316. The equalization unit 313 supplies the equalized I-signal and Q-signal to the PLS code decoding unit 314, the LDPC encoding/decoding unit 315, and the distortion information generation unit 316.

In step S104, the PLS code decoding unit 314 decodes the I-signal and Q-signal supplied from the equalization unit 313, into a PLS code. The PLS code decoding unit 314 supplies the decoding result to the distortion information generation unit 316 and the BCH encoding/decoding unit 317.

In step S105, the LDPC encoding/decoding unit 315 performs an LDPC encoding/decoding process on the signal point indicated by the I-signal and Q-signal supplied from the equalization unit 313. At this point, the LDPC encoding/decoding unit 315 compensates for the nonlinear distortion caused by the satellite repeating device 12, in accordance with distortion information supplied from the distortion information generation unit 316. The LDPC encoding/decoding unit 315 supplies the data obtained as a result of the LDPC encoding/decoding process, to the distortion information generation unit 316 and the BCH encoding/decoding unit 317.

It should be noted that, when steps S102, S103, and S105 are carried out for the first time, any distortion information has not been generated yet, and therefore, distortion information defined beforehand in transmission standards is used, for example.

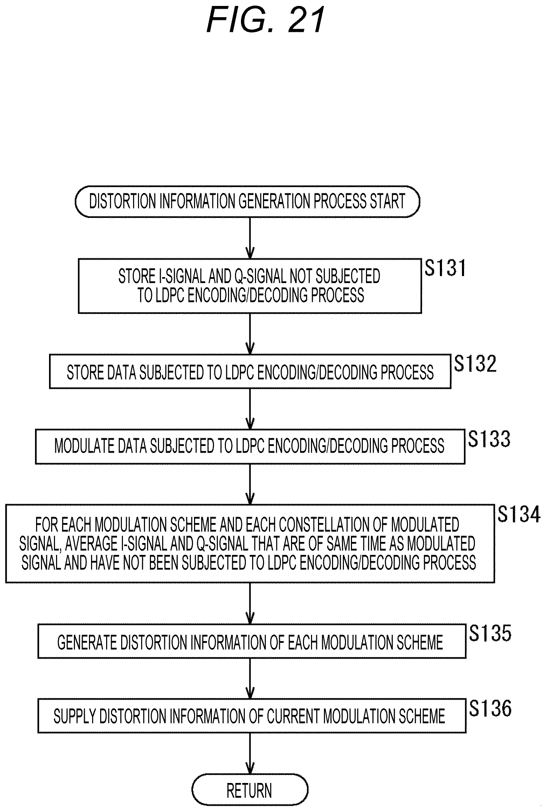

In step S106, for each modulation scheme indicated by the PLS code, the distortion information generation unit 316 performs a distortion information generation process to generate distortion information, using the data subjected to the LDPC encoding/decoding process and the I-signal and Q-signal not subjected to the LDPC encoding/decoding process. This distortion information generation process will be described later in detail, with reference to Fig. 21.

In step S107, in accordance with the PLS code supplied from the PLS code decoding unit 314, the BCH encoding/decoding unit 317 performs BCH encoding/decoding on the data supplied from the LDPC encoding/decoding unit 315, and supplies the decoding result to the energy inverse diffusion unit 318.

In step S108, the energy inverse diffusion unit 318 performs energy inverse diffusion on the decoding result supplied from the BCH encoding/decoding unit 317, and outputs the result.

The above process is repeated until an instruction to end the process is detected in step S109.

Fig. 21 is a flowchart for explaining in detail the distortion information generation process in step S106 shown in Fig. 20.

In step S131 in Fig. 21, the RAM 401 (Fig. 19) of the distortion information generation unit 316 stores the I-signal and the Q-signal that are supplied from the equalization unit 313 and have not been subjected to the LDPC encoding/decoding process yet. In step S132, the RAM 402 stores the data that is supplied from the LDPC encoding/decoding unit 315 and has been subjected to the LDPC encoding/decoding process.

In step S133, the modulation unit 403 reads the data that is stored in the RAM 402 and has been subjected to the LDPC encoding/decoding process, and modulates the data by a modulation scheme included in the PLS code supplied from the PLS code decoding unit 314. In this manner, the modulation unit 403 generates a modulated signal. The modulation unit 403 supplies the generated modulated signal to the averaging unit 404.

In step S134, for each modulation scheme included in the PLS code and each constellation of a modulated signal, the averaging unit 404 generates an average signal by averaging the I-signal and the Q-signal that are of the same time as the modulated signal, have been read from the RAM 401, and have not been subjected to the LDPC encoding/decoding process.

In step S135, for each modulation scheme, the averaging unit 404 sets the respective constellation points of a modulated signal as estimated values of the respective constellation points of the transmission signal, and sets the constellation points of the average signal corresponding to the above constellation points as the constellation points of the reception signal. In this manner, the averaging unit 404 generates distortion information.

In step S136, the averaging unit 404 supplies the distortion information of a modulation scheme included in the current PLS code in the generated distortion information, to the orthogonal detection unit 312, the equalization unit 313, and the LDPC encoding/decoding unit 315.

As a result, the distortion information stored in the storage unit 354 (Fig. 16) of the orthogonal detection unit 312 is updated, the distortion information to be used in a decision to be made by the hard decision unit 373 (Fig. 17), and the likelihood table generation unit 381 (Fig. 18) of the LDPC encoding/decoding unit 315 updates the likelihood table. The process then returns to step S106 in Fig. 20, and moves on to step S107.

As described above, a reception device 112 generates a modulated signal by modulating the data of a reception signal after an LDPC encoding/decoding process, and generates distortion information of each constellation point of the modulated signal by averaging the I-signal and the Q-signal that are of the same time as the modulated signal and have not been subjected to the LDPC encoding/decoding process. That is, the reception device 112 generates the distortion information, using a modulated signal obtained as a result of modulation of data subjected to the LDPC encoding/decoding process, instead of a transmission signal of a known signal of the same constellation point as that of the data section. Thus, nonlinear distortion in a reception signal that does not include any known signal of the same constellation point as that of the data section is compensated for, and the reception performance can be improved.

For example, a reception device 112 can improve the phase synchronization performance and speed up phase synchronization by compensating for nonlinear distortion in accordance with distortion information at the time of the phase error detection. The reception device 112 can also improve the equalization performance by compensating for nonlinear distortion in accordance with distortion information at the time of a hard decision in the equalization process. The reception device 112 can further improve the error correction performance by compensating for nonlinear distortion in accordance with distortion information at the time of generation of the likelihood table to be used in the LDPC encoding/decoding process.

It should be noted that the LDPC encoding/decoding unit 315 may determine whether the LDPC encoding/decoding process has been successfully performed. In this case, for each modulation scheme and each constellation point of a modulated signal, the distortion information generation unit 316 generates an average signal by averaging only the I-signal and the Q-signal that have not been subjected to the LDPC encoding/decoding process and are of the data successfully subjected to the LDPC encoding/decoding process, among the I-signals and the Q-signals that correspond to the modulated signal and have not been subjected to the LDPC encoding/decoding process. In this manner, distortion information can be more accurately generated.

Alternatively, the equalization unit 313 may be a linear equalizer that uses only a feedforward filter, instead of a DFE that uses both a feedforward filter and a feedback filter. In this case, the equalization unit 313 performs equalization error detection in accordance with distortion information.

### <Second Embodiment>

### [Example Configuration of a Second Embodiment of a Reception Device]

A second embodiment of a transmission/reception system to which the present disclosure is applied is similar to the first embodiment, except that broadcast signals of satellite digital television broadcasting are signals in the ARIB STD-B44 transmission format. Only a reception device in the second embodiment of the transmission/reception system will be described below in detail.

Fig. 22 is a block diagram showing an example configuration of a reception device in the second embodiment of a transmission/reception system to which the present disclosure is applied.

In the configuration shown in Fig. 22, the same components as those shown in Fig. 15 are denoted by the same reference numerals as those used in Fig. 15. The explanations that have already been made will not be repeated.

The configuration of the reception device 420 shown in Fig. 22 differs from the configuration of the reception device 112 shown in Fig. 15 in that reception signals are signals in the ARIB STD-B44 transmission format, and the PLS code decoding unit 314, the distortion information generation unit 316, the BCH encoding/decoding unit 317, and the energy inverse diffusion unit 318 are replaced with a TMCC decoding unit 421, a distortion information generation unit 422, a BCH encoding/decoding unit 424, and an energy inverse diffusion unit 423.

The TMCC decoding unit 421 of the reception device 420 decodes an I-signal and a Q-signal supplied from the equalization unit 313, into TMCC information including the modulation scheme of the data section in a reception signal and the like. The TMCC decoding unit 421 supplies the decoding result to the distortion information generation unit 422 and the BCH encoding/decoding unit 424.

The distortion information generation unit 422 generates a modulated signal by modulating the data in the data section minus the sections of transmission constellation signals in the data that has been subjected to an LDPC encoding/decoding process and is supplied from the LDPC encoding/decoding unit 315 (this data section will be hereinafter referred to as the sections minus the transmission constellation signals) by a modulation scheme included in the TMCC information.

For each modulation scheme included in the TMCC information and each constellation point of a modulated signal, the distortion information generation unit 422 generates an average signal by averaging the I-signal and the Q-signal that are of the same time as the modulated signal, are of the section minus the transmission constellation signals, and have not been subjected to the LDPC encoding/decoding process, and the I-signal and the Q-signal that are of the transmission constellation signal of the constellation point and have not been subjected to the LDPC encoding/decoding process.

For each modulation scheme, the distortion information generation unit 422 sets the respective constellation points of a modulated signal as estimated values of the respective constellations of the transmission signal, and sets the constellation points of the average signal corresponding to the above constellation points as the constellation points of the reception signal. In this manner, the distortion information generation unit 422 generates distortion information. The distortion information generation unit 422 supplies the distortion information of a modulation scheme included in the current TMCC information, to the orthogonal detection unit 312, the equalization unit 313, and the LDPC encoding/decoding unit 315.

The energy inverse diffusion unit 423 performs energy inverse diffusion on the data supplied from the LDPC encoding/decoding unit 315, and outputs the result to the BCH encoding/decoding unit 424.

In accordance with the TMCC information supplied from the TMCC decoding unit 421, the BCH encoding/decoding unit 424 performs BCH encoding/decoding on the data supplied from the energy inverse diffusion unit 423, and outputs the decoding result.

### (Example Configuration of the Distortion Information Generation Unit)

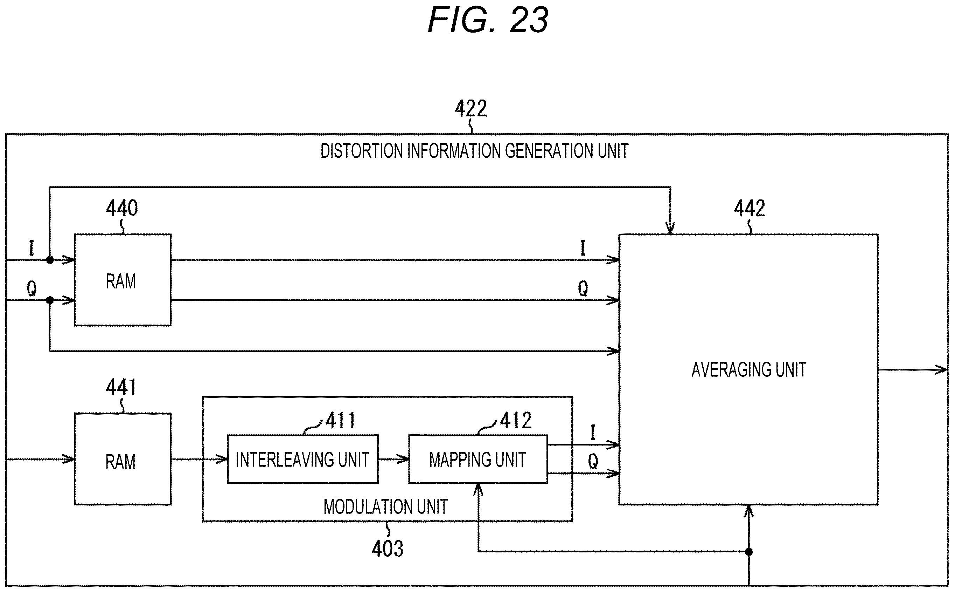

Fig. 23 is a block diagram showing an example configuration of the distortion information generation unit 422 shown in Fig. 22.

In the configuration shown in Fig. 23, the same components as those shown in Fig. 19 are denoted by the same reference numerals as those used in Fig. 19. The explanations that have already been made will not be repeated.

The configuration of the distortion information generation unit 422 shown in Fig. 23 differs from the configuration of the distortion information generation unit 316 shown in Fig. 19 in that the RAM 401, the RAM 402, and the averaging unit 404 are replaced with a RAM 440, a RAM 441, and an averaging unit 442.

The RAM 440 of the distortion information generation unit 422 stores the I-signal and the Q-signal of the section minus the transmission constellation signals among the I-signals and Q-signals that are supplied from the equalization unit 313 shown in Fig. 22 and have not been subjected to the LDPC encoding/decoding process yet. The RAM 441 stores the data of the section minus the transmission constellation signals in the data that is supplied from the LDPC encoding/decoding unit 315 and has been subjected to the LDPC encoding/decoding process.

The averaging unit 442 sets the I-signals and the Q-signals that are supplied from the equalization unit 313 and are of the sections of the transmission constellation signals as the I-signals and the Q-signals that correspond to the modulation schemes included in the TMCC information and the constellations of the transmission constellation signals. It should be noted that, since the modulation scheme of the sections of the transmission constellation signals is the same as the modulation scheme of the section minus the transmission constellation signals, the respective constellations of the transmission constellation signals are the same as the respective constellations of the modulated signal.

The averaging unit 442 also reads, from the RAM 440, the I-signal and the Q-signal of the section minus the transmission constellation signals. The averaging unit 442 sets the read I-signal and Q-signal of the section minus the transmission constellation signals as the I-signal and the Q-signal that correspond to a modulation scheme included in the TMCC information and the constellations of the modulated signal of the same time as the above I-signal and Q-signal.

For each modulation scheme and each constellation point of the modulated signal, the averaging unit 442 generates an average signal by averaging the corresponding I-signal and Q-signal. For each modulation scheme, the averaging unit 442 sets the respective constellation points of a modulated signal as estimated values of the constellations of the transmission signal, and sets the constellation points of the average signal corresponding to the above constellation points as the constellation points of the reception signal. In this manner, the averaging unit 442 generates the distortion information.

The averaging unit 442 supplies the distortion information of a modulation scheme included in the current TMCC information in the generated distortion information, to the orthogonal detection unit 312, the equalization unit 313, and the LDPC encoding/decoding unit 315 shown in Fig. 22.

### (Description of a Process to be Performed by the Reception Device)

A reception process to be performed by the reception device 420 shown in Fig. 22 is similar to the reception process shown in Fig. 20, except that TMCC information, instead of a PLS code, is obtained through decoding in step S104, step S107 and step S108 are carried out in reverse order, and the distortion information generation process in step S106 is changed. Therefore, only the distortion information generation process will be described below.

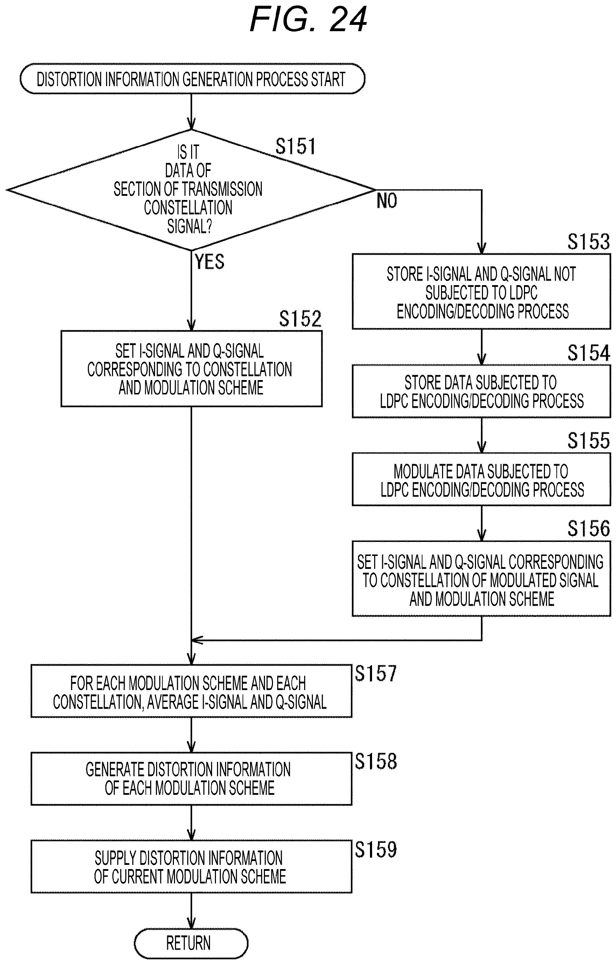

Fig. 24 is a flowchart for explaining in detail a distortion information generation process to be performed by the distortion information generation unit 422 (Fig. 23) of the reception device 420.

In step S151 in Fig. 24, the distortion information generation unit 422 determines whether the data that is supplied from the LDPC encoding/decoding unit 315 and have been subjected to the LDPC encoding/decoding process is the data of the section of a transmission constellation signal.

If the data is determined to be the data of the section of a transmission constellation signal in step S151, the averaging unit 442 of the distortion information generation unit 422 in step S152 sets the I-signal and the Q-signal of the data that are supplied from the equalization unit 313 and have not been subjected to the LDPC encoding/decoding process, as the I-signal and the Q-signal that correspond to the constellation of the transmission constellation signal and to a modulation scheme included in the TMCC information. Then, the process then moves on to step S157.

If the data is determined not to be the data of the section of any transmission constellation signal in step S151, the RAM 440 in step S153 stores the I-signal and the Q-signal that are supplied from the equalization unit 313 and have not been subjected to the LDPC encoding/decoding process.

In step S154, the RAM 441 stores the data that is supplied from the LDPC encoding/decoding unit 315 and has been subjected to the LDPC encoding/decoding process.

In step S155, the modulation unit 403 reads the data that is stored in the RAM 441 and has been subjected to the LDPC encoding/decoding process, and modulates the data by a modulation scheme included in the TMCC information. In this manner, the modulation unit 403 generates a modulated signal. The modulation unit 403 supplies the generated modulated signal to the averaging unit 442.

In step S156, the averaging unit 442 reads, from the RAM 440, the I-signal and the Q-signal that are of the data read from the RAM 441 and have not been subjected to the LDPC encoding/decoding process, and sets the read I-signal and Q-signal as the I-signal and the Q-signal that correspond to a constellation of the modulated signal supplied from the modulation unit 403, and to a modulation scheme included in the TMCC information.

In step S157, for each modulation scheme and each constellation point of the modulated signal, the averaging unit 442 in step S155 and step S156 generates an average signal by averaging the I-signal and the Q-signal that have been set as the I-signal and the Q-signal corresponding to the modulation scheme and the constellation point. The processes in steps S158 and S159 are similar to the processes in steps S135 and S136 in Fig. 21, except that the PLS code is replaced with the TMCC information. Therefore, explanation of those steps is not repeated herein.

As described above, for each constellation point of a modulated signal, the reception device 420 generates distortion information by averaging the I-signal and the Q-signal that are of an unknown signal of the same time as the modulated signal and have not been subjected to the LDPC encoding/decoding process, and the I-signal and the Q-signal that are of the transmission constellation signal of the constellation and have not been subjected to the LDPC encoding/decoding process. Accordingly, the reception device 420 can generate distortion information at a higher speed than in a case where distortion information is generated only with a reception signal of a transmission constellation signal.

Specifically, in the ARIB STD-B44 transmission format, the proportion of transmission constellation signals in an entire transmission signal is small. Therefore, it takes a long time (two seconds or longer) to average the I-signal and the Q-signal corresponding to a reception signal of a transmission constellation signal. Because of this, the channel selection time from the time when a channel is selected till the time when a correct decoding result is output becomes longer.

On the other hand, the reception device 420 in an averaging process uses not only a reception signal of a transmission constellation signal but also the I-signal and the Q-signal corresponding to a reception signal of an unknown signal of the data section. Accordingly, the reception device 420 can obtain the I-signals and the Q-signals necessary for the averaging at a higher speed. As a result, distortion information can be generated at a higher speed, and the channel selection time can be shortened.

### <Third Embodiment>

### (Description of a Computer To Which the Present Disclosure Is Applied)

The above-described series of processes can be executed by hardware or by software. When the series of processes are to be performed by software, the program that forms the software is installed into a computer. Here, the computer may be a computer incorporated into special-purpose hardware, or may be a general-purpose personal computer that can execute various kinds of functions, having various kinds of programs installed thereinto.

Fig. 25 is a block diagram showing an example configuration of the hardware of a computer that performs the above described series of processes in accordance with a program.

In a computer 900, a central processing unit (CPU) 901, a read only memory (ROM) 902, and a random access memory (RAM) 903 are connected to one another by a bus 904.

An input/output interface 905 is further connected to the bus 904. An input unit 906, an output unit 907, a storage unit 908, a communication unit 909, and a drive 910 are connected to the input/output interface 905.

The input unit 906 is formed with a keyboard, a mouse, a microphone, and the like. The output unit 907 is formed with a display, a speaker, and the like. The storage unit 908 is formed with a hard disk, a nonvolatile memory, or the like. The communication unit 909 is formed with a network interface or the like. The drive 910 drives a removable medium 911, such as a magnetic disk, an optical disk, a magnetooptical disk, or a semiconductor memory.

In the computer 900 having the above described configuration, the CPU 901 loads a program stored in the storage unit 908 into the RAM 903 via the input/output interface 905 and the bus 904, for example, and executes the program, so that the above described series of processes are performed.

For example, the program to be executed by the computer 900 (CPU 901) can be recorded in the removable medium 911 as a packaged medium or the like to be provided. Alternatively, the program can be provided via a wired or wireless transmission medium, such as a local area network, the Internet, or digital satellite broadcasting.

In the computer 900, the program can be installed into the storage unit 908 via the input/output interface 905 when the removable medium 911 is mounted on the drive 910. Alternatively, the program may be received by the communication unit 909 through a wired or wireless transmission medium, and be installed into the storage unit 908. Other than the above, the program may be installed beforehand into the ROM 902 or the storage unit 908.

It should be noted that the program to be executed by the computer 900 may be a program for performing processes in chronological order in accordance with the sequence described in this specification, or may be a program for performing processes in parallel or performing a process when necessary, such as when there is a call.

Also, in this specification, a system means an assembly of components (devices, modules (parts), and the like), and not all the components need to be provided in the same housing. In view of this, devices that are housed in different housings and are connected to one another via a network form a system, and one device having modules housed in one housing is also a system.

Further, the advantageous effects described in this specification are merely examples, and the advantageous effects of the present technology are not limited to them and may include other effects.

Also, embodiments of the present disclosure are not limited to the above described embodiments, and various modifications may be made to them within the scope of the present disclosure.

For example, in the first through third embodiments, nonlinear distortion compensation based on distortion information is performed at a time of phase error detection, at a time of a hard decision in an equalization process, and at a time of generation of the likelihood table to be used in an LDPC encoding/decoding process. However, the nonlinear distortion compensation may be performed at least one of these times.

Also, in the second embodiment, the LDPC encoding/decoding unit 315 may determine whether an LDPC encoding/decoding process has been successfully performed, as in the first embodiment. In this case, the distortion information generation unit 422 in an averaging process uses only the I-signal and the Q-signal corresponding to the data on which the LDPC encoding/decoding process has been successfully performed among the I-signals and the Q-signals that are of the section minus the transmission constellation signals and have not been subjected to the LDPC encoding/decoding process.

### REFERENCE SIGNS LIST

- 112: Reception device
- 355: Phase error detection unit
- 373: Hard decision unit
- 381: Likelihood table generation unit
- 383: Decoding unit
- 403: Modulation unit
- 404: Averaging unit
- 420: Reception device
- 441: Averaging unit

## Claims

1. A reception device comprising:
a modulation unit (403) configured to generate a modulated signal by modulating data of a reception signal, the data having been subjected to error correction; where the reception signal has been previously demodulated into an I-signal and a Q-signal;
an averaging unit (404; 442) configured to generate distortion information for each constellation point of the modulated signal by averaging the I-signal and Q-signal values of the reception signal before error correction corresponding to each particular constellation point of said modulated signal;
a likelihood table generation unit (381) configured to generate a likelihood table to be used in the error correction, in accordance with the distortion information; and
a soft decision unit (383) configured to make a soft decision on the reception signal in accordance with the distortion information,
wherein the soft decision unit (383) generates the data by performing the error correction on the reception signal, using the likelihood table generated by the likelihood table generation unit (381).

2. The reception device according to claim 1, further comprising
a hard decision unit (373) configured to make a hard decision on the reception signal in accordance with the distortion information.

3. The reception device according to claim 2, further comprising
a phase error detection unit (355) configured to perform phase error detection on the reception signal, using a result of the hard decision made by the hard decision unit (373).

4. The reception device according to claim 2, wherein the hard decision unit (373) makes a hard decision on the reception signal subjected to an equalization process, in accordance with the distortion information.

5. The reception device according to claim 1, wherein, for each constellation point of the modulated signal, the averaging unit (404; 442) averages the reception signal values that are of the data on which the error correction has been successfully performed and has not been subjected to the error correction, in the reception signal that is of the same time as the modulated signal and has not been subjected to the error correction.

6. The reception device according to claim 1, wherein, for each constellation point of the modulated signal, the averaging unit (404; 442) averages the reception signal that is of an unknown signal of the same time as the modulated signal and has not been subjected to the error correction, and the reception signal that is of a known signal of the constellation and has not been subjected to the error correction.

7. A reception method comprising:
a modulation step (133; 155) of generating a modulated signal by modulating data of a reception signal, the data having been subjected to error correction; where the reception signal has been previously demodulated into an I-signal and a Q-signal;
a distortion information generation step (135; 158) of generating distortion information for each constellation point of the modulated signal by averaging the I-signal and Q-signal values of the reception signal before error correction corresponding to each particular constellation point of the modulated signal;
a likelihood table generation step of generating a likelihood table to be used in the error correction, in accordance with the distortion information; and
a soft decision step of making a soft decision on the reception signal in accordance with the distortion information,
wherein a soft decision unit (383) generates the data by performing the error correction on the reception signal, using the likelihood table generated by the likelihood table generation unit (381),
wherein the steps are carried out by a reception device (112; 420) .

8. A computer program comprising instructions which, when the program is executed by a computer, cause the computer to carry out the method of claim 7.

## Patentansprüche

1. Empfangseinrichtung, die Folgendes umfasst:
eine Modulationseinheit (403), die konfiguriert ist, ein moduliertes Signal durch Modulieren von Daten eines Empfangssignals zu erzeugen, wobei die Daten einer Fehlerkorrektur unterworfen worden sind und das Empfangssignal zuvor in ein I-Signal und ein Q-Signal demoduliert worden ist;
eine Mittelungseinheit (404; 442), die konfiguriert ist, Verzerrungsinformationen für jeden Konstellationspunkt des modulierten Signals durch Mitteln der I-Signalwerte und der Q-Signalwerte des Empfangssignals vor der Fehlerkorrektur, das jedem bestimmten Konstellationspunkt des modulierten Signals entspricht, zu erzeugen;
eine Wahrscheinlichkeitstabellen-Erzeugungseinheit (381), die konfiguriert ist, eine Wahrscheinlichkeitstabelle, die in der Fehlerkorrektur verwendet werden soll, gemäß den Verzerrungsinformationen zu erzeugen; und
eine weiche Entscheidungseinheit (383), die konfiguriert ist, eine weiche Entscheidung am Empfangssignal gemäß den Verzerrungsinformationen vorzunehmen, wobei
die weiche Entscheidungseinheit (383) die Daten durch Durchführen der Fehlerkorrektur am Empfangssignal unter Verwendung der Wahrscheinlichkeitstabelle, die durch die Wahrscheinlichkeitstabellen-Erzeugungseinheit (381) erzeugt wurde, erzeugt.

2. Empfangseinrichtung nach Anspruch 1, die ferner Folgendes umfasst:
eine harte Entscheidungseinheit (373), die konfiguriert ist, eine harte Entscheidung am Empfangssignal gemäß den Verzerrungsinformationen vorzunehmen.

3. Empfangseinrichtung nach Anspruch 2, die ferner Folgendes umfasst:
eine Phasenfehlerdetektionseinheit (355), die konfiguriert ist, eine Phasenfehlerdetektion am Empfangssignal unter Verwendung eines Ergebnisses der harten Entscheidung, die durch die harte Entscheidungseinheit (373) vorgenommen wurde, durchzuführen.

4. Empfangseinrichtung nach Anspruch 2, wobei die harte Entscheidungseinheit (373) eine harte Entscheidung am Empfangssignal, das einem Entzerrungsvorgang unterworfen worden ist, gemäß den Verzerrungsinformationen vornimmt.

5. Empfangseinrichtung nach Anspruch 1, wobei die Mittelungseinheit (404; 442) für jeden Konstellationspunkt des modulierten Signals die Empfangssignalwerte, die von den Daten, an denen die Fehlerkorrektur erfolgreich durchgeführt worden ist, stammen und die der Fehlerkorrektur noch nicht unterworfen worden sind, im Empfangssignal, das von derselben Zeit wie das modulierte Signal stammt und der Fehlerkorrektur noch nicht unterworfen worden ist, mittelt.

6. Empfangseinrichtung nach Anspruch 1, wobei die Mittelungseinheit (404; 442) für jeden Konstellationspunkt des modulierten Signals das Empfangssignal, das von einem unbekannten Signal derselben Zeit wie das modulierte Signal stammt und der Fehlerkorrektur noch nicht unterworfen worden ist, und das Empfangssignal, das von einem bekannten Signal der Konstellation stammt und der Fehlerkorrektur noch nicht unterworfen worden ist, mittelt.

7. Empfangsverfahren, das Folgendes umfasst:
einen Modulationsschritt (133; 155) zum Erzeugen eines modulierten Signals durch Modulieren von Daten eines Empfangssignals, wobei die Daten einer Fehlerkorrektur unterworfen worden sind und das Empfangssignal zuvor in ein I-Signal und ein Q-Signal demoduliert worden ist;
einen Verzerrungsinformationserzeugungsschritt (135; 158) zum Erzeugen von Verzerrungsinformationen für jeden Konstellationspunkt des modulierten Signals durch Mitteln der I-Signalwerte und der Q-Signalwerte des Empfangssignals vor der Fehlerkorrektur, das jedem bestimmten Konstellationspunkt des modulierten Signals entspricht;
einen Wahrscheinlichkeitstabellen-Erzeugungsschritt zum Erzeugen einer Wahrscheinlichkeitstabelle, die in der Fehlerkorrektur verwendet werden soll, gemäß den Verzerrungsinformationen; und
einen weichen Entscheidungsschritt zum Vornehmen einer weichen Entscheidung am Empfangssignal gemäß den Verzerrungsinformationen, wobei
eine weiche Entscheidungseinheit (383) die Daten durch Durchführen der Fehlerkorrektur am Empfangssignal unter Verwendung der Wahrscheinlichkeitstabelle, die durch die Wahrscheinlichkeitstabellen-Erzeugungseinheit (381) erzeugt wurde, erzeugt und
die Schritte durch eine Empfangseinrichtung (112; 420) ausgeführt werden.

8. Computerprogramm, das Anweisungen umfasst, die, wenn das Programm durch einen Computer ausgeführt wird, bewirken, dass der Computer das Verfahren nach Anspruch 7 ausführt.

## Revendications

1. Dispositif de réception comprenant :
une unité de modulation (403) configurée pour générer un signal modulé en modulant des données d'un signal de réception, les données ayant été soumises à une été d'erreur ; le signal de réception ayant une précédemment démodulé en un signal I et un signal Q ;
une unité de moyennage (404 ; 442) configurée pour générer des informations de distorsion pour chaque point de constellation du signal modulé en moyennant les valeurs de signal I et de signal Q du signal de réception avant une correction d'erreur correspondant à chaque point de constellation particulier dudit signal modulé ;
une unité de génération de table de probabilité (381) configurée pour générer une table de probabilité à utiliser dans la correction d'erreur, conformément aux informations de distorsion ; et
une unité de décision pondérée (383) configurée pour prendre une décision pondérée sur le signal de réception conformément aux informations de distorsion,
dans lequel l'unité de décision pondérée (383) génère les données en exécutant la correction d'erreur sur le signal de réception, en utilisant la table de probabilité générée par l'unité de génération de table de probabilité (381).

2. Dispositif de réception selon la revendication 1, comprenant en outre
une unité de décision ferme (373) configurée pour prendre une décision ferme sur le signal de réception conformément aux informations de distorsion.

3. Dispositif de réception selon la revendication 2, comprenant en outre
une unité de détection d'erreur de phase (355) configurée pour réaliser une détection d'erreur de phase sur le signal de réception, à l'aide d'un résultat de la décision ferme prise par l'unité de décision ferme (373).

4. Dispositif de réception selon la revendication 2, dans lequel l'unité de décision ferme (373) prend une décision ferme sur le signal de réception soumis à un processus d'égalisation, conformément aux informations de distorsion.

5. Dispositif de réception selon la revendication 1, dans lequel, pour chaque point de constellation du signal modulé, l'unité de moyennage (404 ; 442) réalise une moyenne des valeurs de signal de réception qui se rapportent aux données sur lesquelles la correction d'erreur a été réalisée avec succès et n'ont pas été soumises à la correction d'erreur, dans le signal de réception qui est simultané au signal modulé et n'a pas été soumis à la correction d'erreur.

6. Dispositif de réception selon la revendication 1, dans lequel, pour chaque point de constellation du signal modulé, l'unité de moyennage (404 ; 442) réalise une moyenne du signal de réception qui est d'un signal inconnu simultané au signal modulé et n'a pas été soumis à la correction d'erreur, et du signal de réception qui est d'un signal connu de la constellation et n'a pas été soumis à la correction d'erreur.

7. Procédé de réception comprenant :
une étape de modulation (133 ; 155) consistant à générer un signal modulé en modulant des données d'un signal de réception, les données ayant été soumises à une correction d'erreur ; le signal de réception ayant été précédemment démodulé en un signal I et un signal Q ;
une étape de génération d'informations de distorsion (135 ; 158) consistant à générer des informations de distorsion pour chaque point de constellation du signal modulé en moyennant les valeurs de signal I et de signal Q du signal de réception avant la correction d'erreur correspondant à chaque point de constellation particulier du signal modulé ;
une étape de génération de table de probabilité consistant à générer une table de probabilité à utiliser dans la correction d'erreur, conformément aux informations de distorsion ; et
une étape de décision pondérée consistant à prendre une décision pondérée sur le signal de réception conformément aux informations de distorsion,
dans lequel une unité de décision pondérée (383) génère les données en exécutant la correction d'erreur sur le signal de réception, à l'aide de la table de probabilité générée par l'unité de génération de table de probabilité (381),
dans lequel les étapes sont réalisées par un dispositif de réception (112 ; 420).

8. Programme informatique comprenant des instructions qui, à l'exécution du programme par un ordinateur, amènent l'ordinateur à réaliser le procédé selon la revendication 7.
